# EUROPÄISCHE PATENTSCHRIFT

(11) **EP 0 956 147 B1**
(45) Veröffentlichungstag und Bekanntmachung des Hinweises auf die Patenterteilung: **31.07.2002**
(21) Anmeldenummer: 97954413.7
(22) Anmeldetag: 17.12.1997
(51) Int. Cl.: B01D 63/02, B01D 61/00, B01D 63/04, B01J 20/32, B01J 35/06

(54) **MEMBRANMODUL MIT SCHICHTFÖRMIG ANGEORDNETEN HOHLFASERMEMBRANEN**
MEMBRANE MODULE WITH HOLLOW FIBRE MEMBRANES ARRANGED IN LAYERS
MODULE A MEMBRANES CONSTITUEES DE FIBRES CREUSES ET DISPOSEES EN COUCHES

(30) Priorität: 21.12.1996 DE 19653883
(43) Veröffentlichungstag der Anmeldung: 17.11.1999
(73) Patentinhaber: MAT Adsorption Technologies GmbH & Co. KG, 63784 Obernburg (DE)
(72) Erfinder: BAURMEISTER, Ulrich, D-42115 Wuppertal (DE); WOLLBECK, Rudolf, D-63906 Erlenbach (DE)
(74) Vertreter: Fett, Günter
(86) Internationale Anmeldenummer: EP9707083
(87) Internationale Veröffentlichungsnummer: WO9828064

(56) Entgegenhaltungen:
- EP-A- 0 285 812
- EP-A- 0 354 061
- US-A- 5 516 691
- US-A- 5 693 230

## Beschreibung

Die Erfindung betrifft eine Vorrichtung zur stoffspezifischen Behandlung eines Fluids, enthaltend
a) ein Gehäuse,
b) eine Einlaßeinrichtung zum Einleiten des zu behandelnden Fluids in das Gehäuse, die mit einem Verteilerraum in Verbindung steht,
c) eine Auslaßeinrichtung zum Ableiten des behandelten Fluids aus dem Gehäuse, die mit einem Sammelraum in Verbindung steht,
d) eine Anordnung aus ersten Hohlfasermembranen und zweiten Hohlfasermembranen,
wobei die Hohlfasermembranen zueinander im wesentlichen parallel angeordnet sind und die Hohlfasermembranen ein dem Verteilerraum zugewandtes Ende und ein dem Sammelraum zugewandtes Ende aufweisen, wobei die ersten Hohlfasermembranen durch ihre Wände gebildete, in Richtung des Verteilerraums geöffnete und in Richtung des Sammelraums geschlossene Hohfräume aufweisen und an mindestens ihrem dem Verteilerraum zugewandten Ende in einer mit der Gehäusewand fluiddicht verbundenen Vergußmasse eingebettet sind, wobei die zweiten Hohlfasermembranen durch ihre Wände gebildete, in Richtung des Sammelraums geöffnete und in Richtung des Verteilerraums geschlossene Hohlräume aufweisen und an mindestens ihrem dem Sammelraum zugewandten Ende in einer mit der Gehäusewand fluiddicht verbundenen Vergußmasse eingebettet sind und wobei im Gehäuse eine Matrix enthalten ist, auf und/oder in der stoffspezifisch wirkende Gruppen immobilisiert sind.

Stoffspezifische Behandlungen von Fluiden gewinnen in zunehmendem Maße an Bedeutung in Anwendungsgebieten wie der Biotechnologie, der Medizin oder der chemischen Technologie. Unter Fluiden sind dabei Gase, Gasgemische sowie allgemein Flüssigkeiten wie z.B. Proteinlösungen, vorfiltrierte Suspensionen oder klare Lösungen zu subsumieren. Ein Beispiel für eine stoffspezifische Behandlung ist die Gewinnung von Wirkstoffen aus Zellsuspensionen, in denen genmodifizierte Zellen Stoffe wie Antikörper, Hormone, Wachstumsfaktoren oder Enzyme in meist kleinen Konzentrationen produziert haben. Eine wichtige Anwendung ist auch die extrakorporale Entfernung von unerwünschten Substanzen aus dem menschlichen Blutplasma sowie die Gewinnung von Komponenten wie z.B. Immunglobulinen oder Gerinnungsfaktoren aus gespendetem Blutplasma. Schließlich ist eine breite Anwendung auch die katalytische oder biokatalytische - enzymatische - Behandlung von Flüssigkeiten wie z.B. die Hydrolyse von Ölen durch Lipasen, die an einer Matrix immobilisiert sind.

Die stoffspezifische Behandlung von Fluiden erfolgt vielfach derart, daß das zu behandelnde Fluid mit einem Trägermaterial in Kontakt gebracht wird, auf und/oder in dem wechselwirkende Gruppen oder Substanzen immobilisiert sind, die in spezifischer, selektiver Weise mit der in dem Fluid enthaltenen Zielsubstanz, d.h. der Substanz, auf die die stoffspezifische Behandlung ausgerichtet ist, wechselwirken. Solche Wechselwirkungen können beispielsweise Kationen- oder Anionenaustausch, Hydrophil-Hydrophob-Wechselwirkung, Wasserstoffbrückenbildung, Affinität oder enzymatische oder katalytische Reaktionen und dergleichen sein. Bei der affinen Stofftrennung, wie z.B. der Affinitätschromatographie, sind an das Trägermaterial Liganden gekoppelt oder im Trägermaterial immobilisiert, die die Funktion haben, eine einzelne Zielsubstanz oder auch eine ganze Klasse von Substanzen adsorptiv spezifisch zu binden. Diese Zielsubstanz wird als Ligat bezeichnet. Ein Beispiel für klassenspezifische Liganden sind positiv geladene Diethylaminoethyl(DEAE)-Gruppen oder negativ geladene Sulfonsäure(SO₃)-Gruppen, die die Klasse der positiv geladenen bzw. negativ geladenen Moleküle adsorbieren. Spezifische Liganden sind z.B. Antikörper gegen ein bestimmtes Protein, das als Ligat an den Antikörper gebunden wird.

Wesentliche Kriterien bei der stoffspezifischen Behandlung von Fluiden sind Produktivität und Selektivität. Mit Blick auf die Produktivität ist es wichtig, daß möglichst viele stoffspezifisch wirkende Gruppen pro volumeneinheit zur Verfügung stehen, die mit der in dem zu behandelnden Fluid enthaltenen Zielsubstanz in Wechselwirkung treten können. Gleichzeitig ist eine Maximierung des Transports der Zielsubstanz zu den stoffspezifisch wirkenden Gruppen bzw. Substanzen anzustreben.

Ein in der Affinitätschromatographie häufig eingesetztes Trägermaterial für Liganden sind Sepharosepartikel, die in Form einer Schüttung in einer Chromatographiesäule vorliegen. Wenngleich sich hierbei eine hohe Konzentration an Liganden mit hoher Selektivität realisieren läßt, ist die Produktivität wegen der hohen Druckverluste der Partikelsäulen und der Kompressibilität der Sepharosepartikel bekanntermaßen gering. Darüberhinaus ist der Zugang der Ligaten zu den in den Sepharosepartikeln enthaltenen Liganden diffusionskontrolliert, wodurch insbesondere bei der Abtrennung von größeren Molekülen wie z.B. von Proteinen aufgrund geringer Diffusionsgeschwindigkeiten lange Verweilzeiten und damit nur geringe Durchsätze und geringe Produktivitäten resultieren. Verbesserte Chromatographie-Säulenmaterialien werden in der US-A-5 019 270 beschrieben. Diese bestehen aus starren, porösen Partikeln, die konvektiv durchströmt werden können. Aufgrund des konvektiven Stofftransports durch die Partikel und der fehlenden Kompressibilität ist gegenüber dem zuvor genannten Säulenmaterial eine Reduzierung der Verweilzeit und eine Steigerung der Produktivität möglich.

Zwar ist ein Vorteil von mit solchen Partikeln gefüllten Chromatographiesäulen, daß deren Aufbau und Verwendung sehr einfach ist. Sie weisen jedoch eine Reihe von Nachteilen auf, wobei außer den für Sepharosepartikel diskutierten Nachteilen als weiterer Nachteil insbesondere bei Chromatographiesäulen mit größeren Durchmessern eine ungleichförmige Durchströmung der Partikelschüttungen zu nennen ist, die sich negativ in bezug auf eine gleichmäßige Nutzung aller in der Chromatographiesäule vorhandenen Liganden auswirkt. Ferner wird die technische Beherrschung der erforderlichen Drücke mit größeren Durchmessern zunehmend aufwendiger.

Die geschilderten Nachteile partikelförmiger Trägermaterialien führten zur Entwicklung einer Reihe von Verfahren zur stoffspezifischen Behandlung von Fluiden, bei denen Membranen mit poröser Struktur als Trägermaterialien für wechselwirkende Gruppen eingesetzt werden. Aufgrund ihrer porösen Struktur stellen Membranen eine große innere Oberfläche zur Verfügung, so daß an die Membranen in einer hohen Konzentration pro Volumeneinheit eine große Anzahl von funktionellen Gruppen gekoppelt werden kann, die in Wechselwirkung mit den die Membran durchströmenden, zu behandelnden Fluiden treten (s. z.B. E. Klein, "Affinity Membranes", John Wiley & Sons, Inc., 1991; S. Brandt u. a., "Membrane-Based Affinity Technology for Commercial Scale Purifications", Bio/Technology Vol. 6 (1988), S. 779-782).

Über die Ausführung der verwendeten Membran kann eine Anpassung an die Erfordernisse des Behandlungsverfahrens erfolgen. Es stehen Membranen in Form von Hohlfasern oder als Flachmembranen aus unterschiedlichsten Materialien zur Verfügung, so daß eine Anpassung an die physikochemischen Eigenschaften der zu behandelnden Fluide möglich ist. Auch die Porengröße der Membranen kann so eingestellt werden, daß ein zu behandelndes Fluid z.B. mit einer in ihm enthaltenen Zielsubstanz durch die Membran konvektiv hindurchströmen kann und - im Falle der Anbindung der Zielsubstanz an die wechselwirkenden Gruppen - keine Blockierung der Membran eintritt.

Durch die Dicke der Membranwand läßt sich bei gegebener linearer Flußgeschwindigkeit die Verweilzeit des zu behandelnden Fluids in der Membran sowie der bei der Durchströmung entstehende Druckverlust beeinflussen. Aufgrund ihrer in der Regel nur geringen Wanddicke (z.B. <300 µm) zeichnen sich Membranen durch kurze Transportwege des zu behandelnden Fluids z.B. zu in den Membranen immobilisierten, wechselwirkenden Gruppen aus, wodurch die Verweilzeiten vergleichsweise kurz, die Druckverluste gering, die linearen Flußgeschwindigkeiten und damit die Bindungsraten hoch sind.

Es sind eine Reihe von solche Membranen enthaltenden Vorrichtungen beschrieben, die bei Verfahren zur stoffspezifischen Behandlung von Fluiden verwendet werden. Dabei ist zwischen dem sogenannten dead-end-Modus bzw. den dead-end-Modulen und dem cross-flow-Modus bzw. den cross-flow-Modulen zu unterscheiden.

Bei der Fahrweise im cross-flow-Modus fließt das zu behandelnde Fluid als Feedstrom parallel zur einen Seite der Membran, und ein Teil des Feedstroms tritt als Permeat durch die Membran hindurch. Daraus ergibt sich, daß bei cross-flow Modulen stets nur ein Teil der zu behandelnden Flüssigkeit, nämlich der Teil, der als Permeat durch die Membranwand tritt, der stoffspezifischen Behandlung unterzogen werden kann, die in der Regel in der Membranwand oder auch im Außenraum der Membranen erfolgt. Demzufolge sind die Wirkungsgrade dieser cross-flow Module in bezug auf die stoffspezifische Behandlung beschränkt.

Beim dead-end-Modus hingegen wird das gesamte, als Feedstrom in den Membranmodul einströmende Fluid durch die Membran hindurchgeführt und auf der der Einströmseite der Membran gegenüberliegenden Abströmseite als Filtrat bzw. Permeat abgeleitet.

In der US-A-4 935 142 wird eine Vorrichtung zur Durchführung von Affinitätstrennverfahren im dead-end-Modus beschrieben, die Stapel aus Flachmembranen enthält. An die Flachmembranen sind Liganden gekoppelt, an die aus der zu behandelnden Flüssigkeit abzutrennende Ligaten gebunden werden. Die Anzahl der die Stapel aufbauenden Flachmembranscheiben und damit die Membranfläche hängt von der erforderlichen Kapazität der Vorrichtung ab und von deren zulässigem Druckverlust. Die den Membranstapel aufbauenden Flachmembranen müssen gegen das umgebende Gehäuse abgedichtet werden, um so eine Zwangsströmung durch den Membranstapel zu erzeugen. Ein derartiger Aufbau erweist sich unter dem Gesichtspunkt der Maßstabsvergrößerung als ungünstig, da zur Bereitstellung einer genügend großen Membranfläche der Stapel eine Vielzahl von Flachmembranen enthalten muß, woraus ein hoher Druckverlust bei der Durchströmung des Stapels resultiert. Bei einer Vergrößerung des Durchmessers der Flachmembranscheiben sind hingegen zusätzliche Maßnahmen erforderlich, um eine gleichmäßige Verteilung des zu behandelnden Fluids auf die Membranscheiben zu gewährleisten und dabei den Flachmembranelementen sowie dem Gehäuse eine hinreichende Stabilität gegenüber den auftretenden Drücken zu verleihen.

In der EP-A-0 173 500 werden ebenfalls Vorrichtungen für den Einsatz bei membranbasierten Affinitätstrennverfahren wie z. B. der Isolierung von Immunglobulinen, Antikörpern u.ä. beschrieben. Diese Vorrichtungen bzw. Membranmodule enthalten sternförmig gefaltete, mikroporöse Flachmembranen. Die sternförmig gefalteten Flachmembranen sind zwischen zwei groben Gittern abgestützt und zwischen zwei koaxial zueinander angeordneten zylinderförmigen Gehäuseelemente eingebracht. Gemäß EP-A-0 610 755 werden bei gleichem Aufbau der Vorrichtungen wie in der EP-A-0 173 500 beschrieben mehrere sternförmig gefaltete Flachmembranen konzentrisch zueinander im Gehäuse angeordnet, um die Membranfläche zu vergrößern, die Durchströmung zu vergleichmäßigen und einem Durchbruch der Zielsubstanzen entgegenzuwirken.

Die zu behandelnde Flüssigkeit wird bei den genannten Vorrichtungen unter Druckbeaufschlagung von innen nach außen oder auch in umgekehrter Richtung durch den Modul geführt und durchströmt dabei im dead-end-Modus die Membran. Gegenüber Modulen mit ungefalteten, konzentrisch zueinander angeordneten Membranen bieten die genannten Module den Vorteil einer relativ größeren Membranfläche bei vergleichsweise geringerem Druckverlust. Jedoch sind in der Regel nur geringe Füllgrade, definiert als Volumen der Membranen, bezogen auf das Gesamtvolumen des Moduls, möglich.

Die DE-A-33 02 384 beschreibt einen Hohlfasermembranen enthaltenden dead-end-Modul zur Behandlung von Blutplasma. Dieser Modul enthält zwei hintereinandergeschaltete und nebeneinander angeordnete Bündel von Hohlfasermembranen, mittels derer eine Abscheidung pathologischer Moleküle aus dem Blutplasma über Größenfraktionierung erfolgt. Die Enden der Hohlfasermembranen der beiden Membranbündel sind so in gemeinsamen Einbettungen im Gehäuse des Moduls eingegossen, daß die Hohlfasermembranen des ersten Membranbündels an ihrem dem Einlauf in den Modul zugewandten Ende offen und an ihrem entgegengesetzten Ende verschlossen sind, wohingegen die Hohlfasermembranen des zweiten Membranbündels an ihrem dem Auslauf aus dem Modul zugewandten Ende geöffnet und an ihrem anderen Ende verschlossen sind. Die offenen Enden der beiden Hohlfaserbündel sind also entgegengesetzt angeordnet. Im Betrieb strömt das zu behandelnde Blutplasma, aus dem die pathogenen Bestandteile abgefiltert werden sollen, im dead-end-Modus zunächst über die geöffneten Enden der Hohlfasermembranen des ersten Membranbündels in das Lumen dieser Membranen und durch deren Wand in den extraluminaren Bereich. Das somit einmal filtrierte Plasma fließt dann von außen nach innen in das Lumen der Hohlfasermembranen des zweiten Membranbündels und verläßt diese durch deren geöffnete Enden. Durch die Ausführung und die benachbarte Anordnung der Bündel gemäß der DE-A-33 02 384 sind jedoch definierte Strömungen des zu behandelnden Fluids von den Hohlfasermembranen des ersten Membranbündels zu den Hohlfasermembranen des zweiten Membranbündels nicht realisierbar und werden hohe Füllgrade, d.h. große Verhältnisse von Volumen der Hohlfasermembranen, bezogen auf deren Außendurchmesser, zu Gehäusevolumen nicht erreicht.

In der DE-A-37 09 432 wird ein dead-end Modul zur Sterilisation von flüssigen Medien offenbart, der zwei hintereinandergeschaltete, nebeneinander angeordnete Bündel von Hohlfasermembranen enthält und von seinem Aufbau her dem in der DE-A-33 02 384 beschriebenen ähnlich ist. Bei dem Modul gemäß DE-A-37 09 432 kann die Membran mindestens eines der Hohlfaserbündel Adsorptivstoffe aufweisen. Die Bündel können darüberhinaus von einer zusätzlichen Filtrationseinrichtung in Form eines semipermeablen Schlauchs umschlossen sein, wobei diese ebenfalls Adsorptivstoffe aufweisen kann.

Vielen dead-end Modulen gemeinsam sind die Nachteile, daß die Verteilung des zu behandelnden Fluids auf die Membranfläche bei großen Bauvolumina in starkem Maße uneinheitlich ist, daß entweder die Druckverluste zu hoch oder die Füllgrade und damit die Kapazität pro Füllvolumen zu gering sind. Darüberhinaus sind diese Membranmodule nach dem Stand der Technik insofern wenig flexibel einsetzbar, da bei ihrer Anwendung in der Regel nur eine einzige stoffspezifische Behandlung an einem zu behandelnden Fluid durchgeführt werden kann.

Es ist daher Aufgabe der Erfindung, eine Vorrichtung der eingangs genannten Art zur stoffspezifischen Behandlung von Fluiden zur Verfügung zu stellen, die nach dem dead-end-Modus betrieben wird und bei der die genannten Nachteile des Standes der Technik zumindest reduziert sind und die in einfacher Weise herstellbar ist. Insbesondere soll in der Vorrichtung eine kontrollierte Strömung des zu behandelnden Fluids von den ersten zu den zweiten Hohlfasermembranen erfolgen. Desweiteren soll die Vorrichtung flexibel an die jeweilige Fluidbehandlung angepaßt werden können und insbesondere gleichzeitig verschiedenartige stoffspezifische Behandlungen und/oder unmittelbar aufeinanderfolgend verschiedenartige stoffspezifische Behandlungen ermöglichen.

Es ist des weiteren Aufgabe der Erfindung, ein Verfahren zur effizienten stoffspezifischen Behandlung von Fluiden unter Verwendung von semipermeablen Membranen mit poröser Struktur bereitzustellen, bei dem die oben genannten Nachteile zumindest reduziert sind.

Die Aufgabe wird bei einer Vorrichtung gemäß Oberbegriff des Anspruchs 1 dadurch gelöst, daß die ersten Hohlfasermembranen in mindestens einer flächigen ersten Schicht von nebeneinanderliegenden ersten Hohlfasermembranen und die zweiten Hohlfasermembranen in mindestens einer flächigen zweiten Schicht von nebeneinanderliegenden zweiten Hohlfasermembranen angeordnet sind, daß jede erste Schicht zumindest auf einer ihrer Seiten über im wesentlichen die gesamte Erstreckung ihrer Fläche zu einer zweiten Schicht benachbart ist und jede zweite Schicht zumindest auf einer ihrer Seiten über im wesentlichen die gesamte Erstreckung ihrer Fläche zu einer ersten Schicht benachbart ist, daß die ersten und zweiten Schichten im wesentlichen gleiche Dicke aufweisen und daß der Füllgrad ε des Gehäuses größer als 0,55 ist.

Die Aufgabe wird desweiteren durch ein Verfahren zur stoffspezifischen Behandlung eines Fluids, welches Verfahren mindestens folgende Schritte umfaßt
a) Einleiten des zu behandelnden Fluids über die Einlaßeinrichtung des Gehäuses in den mit der Einlaßeinrichtung in Verbindung stehenden Verteilerraum,
b) von dort Einströmen in die Hohlräume der ersten Hohlfasermembranen und Durchströmen der Wände der ersten Hohlfasermembranen,
c) Ausströmen des Fluids aus den Wänden der ersten Hohlfasermembranen,
d) Einströmen des Fluids in die Wände der zweiten Hohlfasermembranen und Durchströmen der Wände,
e) Ausströmen aus den Wänden der zweiten Hohlfasermembranen in deren Hohlräume,
f) Einströmen in den Sammelraum und
g) Ableiten des Fluids aus dem Gehäuse über die Auslaßeinrichtung,
wobei das Fluid auf dem Weg zwischen dem Verteilerraum und dem Sammelraum die Matrix durchströmt, auf und/oder in der stoffspezifisch wirkende Gruppen immobilisiert sind, und wobei bei der Durchströmung der Matrix die stoffspezfische Behandlung des Fluid erfolgt, dadurch gelöst, daß die erfindungsgemäße Vorrichtung verwendet wird.

Unter zu behandelnden Fluiden werden dabei im Rahmen der vorliegenden Erfindung solche Fluide verstanden, die bestimmte Stoffe oder Zielsubstanzen enthalten, auf die die stoffspezifische Behandlung ausgerichtet ist. Der Füllgrad ε ist definiert als das Verhältnis aus der Summe der Volumina der ersten und zweiten Hohlfasermembranen und der Matrix, jeweils bezogen auf deren Außendurchmesser, zu dem Volumen des durch die Gehäuseinnenwand und die Vergußmassen begrenzten Gehäusevolumens und diesem Gehäusevolumen. Bevorzugt ist der Füllgrad ε größer als 0,7.

Durch die erfindungsgemäße Ausgestaltung der Vorrichtung zur stoffspezifischen Behandlung von Fluiden, insbesondere durch die schichtweise Anordnung der ersten und zweiten Hohlfasermembranen sowie die hohen Füllgrade ist es gegenüber Vorrichtungen gemäß dem Stand der Technik möglich, eine hohe Volumendichte der im Gehäuse enthaltenen stoffspezifisch wirkenden Gruppen zu erreichen. Ebenso wird eine definierte, über die Gehäusequerschnitte bzw. -längsschnitte gesehen gleichmäßige und kontrollierte Strömung von den ersten zu den zweiten Hohlfasermembranen realisiert, so daß auch Kanalbildung, Totzonen oder ähnliches zumindest weitgehend vermieden werden. Als Folge findet eine gleichmäßige Nutzung der in hoher Volumendichte vorliegenden stoffspezifisch wirkenden Gruppen statt. Daher zeichnen sich die erfindungsgemäßen Vorrichtungen auch durch eine kompakte Bauweise aus. Gleichzeitig ist eine Maßstabsvergrößerung bei der erfindungsgemäßen Vorrichtung auf einfache Weise möglich: Aufgrund der Ausgestaltung dieser Vorrichtung kann eine Maßstabsvergrößerung durch einfache Vergrößerung der Abmessungen der ersten und zweiten Schichten in Richtung der Erstrekkung der Hohlfasern sowie quer dazu und/oder durch eine Erhöhung der Anzahl der Schichten ohne eine wesentliche Beeinträchtigung der Strömungsverhältnisse in der Vorrichtung und der Gleichmäßigkeit der Nutzung der stoffspezifisch wirkenden Gruppen problemlos erfolgen.

Die ersten und zweiten Hohlfasermembranen sind bevorzugt in jeweils mindestens eine Hohlfasermatte eingebunden, woraus wiederum die ersten und/oder zweiten Schichten ausgebildet sind. In diese Hohlfasermatten sind die Hohlfasermembranen bevorzugt mittels textiler Fäden eingebunden. Derartige Matten lassen sich vorteilhaft nach bekannten Verfahren als Wirkmatte oder Webmatte, aber auch als Webbändchen, Strick- oder als Häkelmatte herstellen. In den Fällen des Webens oder Wirkens sind die textilen Fäden die quer zu den Hohlfasermembranen verlaufenden Web- bzw. Kettfäden. Durch diese Querfäden werden die Hohlfasermembranen in zueinander im wesentlichen paralleler Anordnung gehalten.

Schichten aus ersten bzw. zweiten Hohlfasermembranen lassen sich z.B. aus mäanderförmig gewebten oder gewirkten Hohlfasermembranmatten herstellen, an deren Seitenkanten die Hohlfasermembranen im Bogen verlaufen und die daher an diesen Kanten zunächst geschlossen sind. Durch Abschneiden der Endbögen an einer Kante einer solchen Matte können die Hohlfasermembranen einseitig geöffnet werden. Vorzugsweise wird jedoch eine solche mäanderförmig gewebte oder gewirkte Matte aus Hohlfasermembranen mittig geteilt, so daß zwei Hälften mit Hohlfasermembranen entstehen, deren Hohlräume einseitig geöffnet sind. Nach Übereinanderschieben der beiden Hälften erhält man in einfacher Weise einen Mattenaufbau mit zwei Lagen, bei denen die geöffneten Enden der Hohlfasermembranen auf gegenüberliegenden Seiten liegen, d.h. es ergibt sich ein zweilagiger Aufbau mit einer ersten und einer zweiten Schicht. Nach einer späteren Einbettung der Enden in eine geeignete Vergußmasse sind die zunächst noch offenen Enden durch die Vergußmasse letztlich geschlossen, wohingegen die zunächst geschlossenen Enden an den Endbögen letztlich nach der Einbettung und dem anschließenden Beschneiden zu offenen Enden werden.

Gemäß einer weiteren Ausgestaltung der Erfindung sind die Hohlfasermembranen mittels flächiger, vorzugsweise streifenförmiger Verbindungselemente in die jeweilige Hohlfasermatte eingebunden. Solche streifenförmigen Verbindungselemente können quer aber auch unter einem anderen Winkel zu den zueinander parallelen Hohlfasermembranen verlaufen und beispielsweise mittels eines punktförmig aufgetragenen Klebers z.B. auf Polyurethanbasis auf diese auflaminiert sein.

Bevorzugt weisen die Hohlfasermatten eine geringe Querdehnung auf, wobei unter Querdehnung die Dehnung der Hohlfasermatten quer zur Erstreckung der Hohlfasermembranen, d.h. also bezogen auf die Mattenbreite verstanden wird. Hierdurch wird vermieden, daß sich bei der Verarbeitung der Hohlfasermatten unerwünschte Abstände zwischen den Hohlfasermembranen innerhalb der jeweiligen Matte ergeben, da diese sich negativ in bezug auf die erfindungsgemäß geforderten hohen Füllgrade auswirken können. Vorzugsweise sind die Hohlfasermatten so ausgeführt, daß ihre Querdehnung bei einer Querbelastung von 12 cN pro cm Mattenbreite kleiner als 1% ist.

Vorzugsweise enthält die erfindungsgemäße Vorrichtung mindestens drei Schichten. In einer bevorzugten Ausgestaltung besteht die Anordnung der ersten und zweiten Hohlfasermembranen aus ebenen ersten Schichten und ebenen zweiten Schichten, die zu einem Stapel aufeinandergelegt sind. In einer weiteren bevorzugten Ausführung der erfindungsgemäßen Vorrichtung sind Hohlfasermatten, die jeweils erste oder zweite Hohlfasermembranen enthalten, übereinandergelegt und anschließend zick-zack-förmig miteinander zu einem Stapel gefaltet. Eine ebenfalls bevorzugte Ausgestaltung der erfindungsgemäßen Vorrichtung beinhaltet eine Anordnung aus ersten und zweiten Schichten, die spiralförmig um eine zu den Hohlfasermembranen parallele Wickelachse gewickelt sind. Bei der Wickelachse kann es sich auch um einen Wickelkern oder um eine flächige Achse, d.h. eine Wickelebene handeln.

Wie ausgeführt, sind die ersten und zweiten Hohlfasermembranen erfindungsgemäß in flächigen ersten bzw. zweiten Schichten angeordnet. Hierbei wird unter einer flächigen Schicht eine solche Schicht verstanden, deren Abmessungen im ebenen Zustand, d.h. also z.B. auch vor einem spiralförmigen Aufwickeln, in Erstreckungsrichtung der Hohlfasermembranen sowie in einer Richtung quer zu den Hohlfasermembranen wesentlich größer ist, als in der verbleibenden, zweiten Richtung quer zu den Hohlfasermembranen, die die Dicke der Schicht bestimmt. Vorzugsweise liegen die Hohlfasermembranen in den ersten bzw. zweiten Schichten flächig nebeneinander, d.h. die Mittelpunkte der Querschnitte der Hohlfasermembranen lassen sich durch eine gerade bzw. spiralförmige Linie miteinander verbinden.

Der Gehäuseinnenwand benachbarte erste Schichten weisen auf ihrer der Gehäuseinnenwand abgewandten Seite erfindungsgemäß eine zweite Schicht auf und der Gehäuseinnenwand benachbarte zweite Schichten entsprechend eine erste Schicht. Aus der Maßgabe, daß jede erste Schicht zumindest auf einer ihrer Seiten zu einer zweiten Schicht benachbart ist und jede zweite Schicht zumindest auf einer ihrer Seiten zu einer ersten Schicht, folgt, daß auf der jeweils anderen Seite der betreffenden Schicht noch einmal die gleiche Schicht benachbart sein kann. Auf diese Weise können zwei Schichten der gleichen Sorte, d.h. zwei erste oder zwei zweite Schichten zueinander benachbart sein, worauf dann allerdings eine Schicht der anderen Sorte benachbart angeordnet sein muß.

Die Anordnung der ersten und zweiten Hohlfasermembranen ist vorzugsweise so aus ersten und zweiten Schichten aufgebaut, daß sie eine alternierende Abfolge von ersten und zweiten Schichten enthält. Ebenso bevorzugt ist eine Anordnung, die aus einer Abfolge von gleichen, jeweils drei übereinanderliegende Schichten enthaltenden Gruppierungen aufgebaut ist, wobei der Aufbau der Gruppierungen in bezug auf die ersten und zweiten Schichten symmetrisch ist. Dies bedeutet, daß eine solche Gruppierung übereinander angeordnet eine erste, eine zweite und als letzte wiederum eine erste Schicht oder eine zweite, eine erste und als letzte wiederum eine zweite Schicht enthält.

Die Schichten sind erfindungsgemäß über im wesentlichen die gesamte Erstreckung ihrer Flächen zueinander benachbart. Es ist jedoch zweckmäßig, daß die ersten und zweiten Schichten in der Anordnung so zueinander benachbart sind, daß die geöffneten Enden der ersten Hohlfasermembranen gegenüber den sich auf dieser Seite der Anordnung befindlichen Enden der zweiten Hohlfasermembranen etwas überstehen. Entsprechendes gilt auch in bezug auf die auf der gegenüberliegenden Seite der Anordnung befindlichen geöffneten Enden der zweiten Hohlfasermembranen. Auf diese Weise läßt sich eine problemlose Einbettung der Enden der Hohlfasermembranen an ihrem geöffneten Ende in die Vergußmasse vornehmen.

Die Einbettung kann dabei so erfolgen, daß jeweils nur die letztlich geöffneten Enden, d.h. die dem Verteilerraum zugewandten Enden der ersten Hohlfasermembranen und die dem Sammelraum zugewandten Enden der zweiten Hohlfasermembranen eingebettet sind. Hierzu ist es jedoch erforderlich, daß die jeweils nicht eingebetteten Enden der ersten und zweiten Hohlfasermembranen geschlossen sind, was z.B. durch Verschweißen oder Verkleben oder, wie oben ausgeführt, durch einen geschlossenen Endbogen erreicht werden kann. Ebenso ist es erforderlich, daß die geschlossenen Enden gegenüber den letztlich offenen Enden der Hohlfasermembranen in den benachbarten Lagen kürzer sind, d.h. gegenüber diesen zurückstehen.

Es ist jedoch natürlich auch möglich, die Hohlfasermembranen jeweils an ihren beiden Enden einzubetten. Hierbei können vor dem Einbetten auch die letztlich geschlossenen Hohlfaserenden zunächst noch offen sein, wenn, wie ausgeführt, die ersten und zweiten Schichten etwas gegeneinander verschoben sind. Der erfindungsgemäß erforderliche Verschluß der letztlich geschlossenen Enden der ersten und der zweiten Hohlfasermembranen erfolgt dann mittels der Vergußmasse, und das jeweils geschlossene Ende der Hohlfasermembranen liegt dann innerhalb der Vergußmasse, wohingegen das letztlich geöffnete Ende durch die Vergußmasse hindurchtritt. Letzteres ist in der Regel vor der Einbettung in die Vergußmasse zunächst mit z.B. einem Stopfen verschlossen, um ein Eindringen der Vergußmasse in den Hohlraum der jeweiligen Hohlfasermembran zu verhindern. Erst nach Beschneiden der Vergußmasse senkrecht zu den Hohlfasermembranen werden diese Enden dann geöffnet, wohingegen die letztlich geschlossenen Enden auch nach dem Schnitt eben geschlossen bleiben.

Es ist auch möglich, bei der Herstellung der Anordnung aus ersten und zweiten Hohlfasermembranen einzelne Elemente zur Entlüfung des die Hohlfasermembranen umgebenden Außenraums in die Vergußmasse mit einzubetten. Diese Elemente können z.B. an einzelnen Stellen zwischen den ersten und zweiten Schichten angeordnet sein, wobei der prinzipielle schichtweise Aufbau der Anordnung nicht wesentlich beeinträchtigt werden soll. Die Entlüftungselemente sind so in die Vergußmassen einzubetten, daß sie durch diese hindurchtreten und eine Ableitung der Luft aus dem Außenraum um die Hohlfasermembranen erfolgen kann. Für den Fall der stoffspezifischen Behandlung beispielsweise von wäßrigen Flüssigkeiten können diese Entlüftungselemente z.B. hydrophobe Hohlfasermembranen sein, die an ihren beiden Enden in die Vergußmassen eingebettet sind. Derartige Konzepte sind beispielsweise in der EP-A-254 100 oder der EP-A-138 060 beschrieben.

Es können Hohlfasermembranen mit verschiedenen äußeren Konturen, d.h. mit im Querschnitt betrachtet verschiedenen äußeren Umrissen eingesetzt werden. Die Hohlfasermembranen können beispielsweise eine im wesentlichen runde bzw. kreisförmige, dreieckige, viereckige, sechseckige oder achteckige Kontur aufweisen, sie können auch oval, elliptisch, dreilappig, vierlappig usw. ausgebildet sein. Bevorzugt werden Konturen, mit denen sich hohe Füllgrade ε realisieren lassen, wie näherungsweise dreieckige, rechteckige, quadratische oder auch sechseckige Konturen. Hierbei bezieht sich der Füllgrad auf das durch die äußere Kontur definierte Volumen der Hohlfasermembranen.

Hohe Füllgrade ε lassen sich auch durch eine geeignete Verformung der verwendeten Hohlfasermembranen erzielen. So können beispielsweise Hohlfasermembranen mit runder Kontur in eine genähert rechteckige Form überführt werden, mittels derer sich höhere Füllgrade realisieren lassen, wenn man etwa eine Hohlfasermatte mit runden Hohlfasern kalandriert. Eine weitere Möglichkeit besteht darin, die Hohlfasern einem Quellvorgang zu unterziehen. Eine solche Quellung wird zweckmäßigerweise nach Einbringen der Hohlfasern in das Gehäuse der erfindungsgemäßen Vorrichtung erfolgen.

Für den Einsatz in der erfindungsgemäßen Vorrichtung haben sich Hohlfasermembranen bewährt, die eine Wandstärke zwischen 15 µm und 900 µm aufweisen, bestens bewährt haben sich Hohlfasermembranen mit einer Wandstärke zwischen 100 µm und 300 µm. Vorzugsweise beträgt der hydraulische Durchmesser des Lumens der eingesetzten Hohlfasermembranen 50 µm bis 900 µm, besonders bevorzugt sind Hohlfasermembranen mit einem hydraulischen Durchmesser des Lumens zwischen 100 µm und 400 µm mit der Definition des hydraulischen Durchmessers als 4*A/U, wobei A die Fläche des Strömungsquerschnitts des Hohlfaserlumens und U den Umfang des Strömungsquerschnitts des jeweiligen Hohlfaserlumens bezeichnet.

Je nach Aufbau der Anordnung der ersten und zweiten Hohlfasermembranen können die ersten und zweiten Hohlfasermembranen hinsichtlich ihrer geometrischen Ausführung gleich sein oder verschieden. So ist es beispielsweise zweckmäßig, bei einem Aufbau der Anordnung, bei dem eine alternierende Abfolge von ersten und zweiten Schichten vorliegt, die ersten und zweiten Hohlfasermembranen gleich auszubilden. Hingegen kann es bei einem Aufbau der Anordnung aus in bezug auf die ersten und zweiten Schichten symmetrisch aufgebauten Gruppierungen aus je drei Schichten von Vorteil sein, wenn der hydraulische Durchmesser der Hohlfasermembranen, die in der in geringerem Anteil vorliegenden Sorte von Schichten beinhaltet sind, größer ausgeführt ist.

Die Dicke der ersten und der zweiten Schichten ist erfindungsgemäß im wesentlichen gleich. Hierbei wird unter im wesentlichen gleich verstanden, daß die Dicken der ersten und der zweiten Schichten sich maximal um den Faktor 1,5 unterscheiden. Je nach Anwendung kann es geboten sein, erste und zweite Hohlfasermembranen einzusetzen, deren äußere Durchmesser sich in starkem Maße unterschieden. Zur Anpassung z.B. der Druckverluste bei der Durchströmung der Hohlräume bzw. Lumina der unterschiedlichen Hohlfasermembranen und zur Gewährleistung einer gleichförmigen Strömung entlang der Hohlfasermembranen, kann es dann aber z.B. erforderlich sein, mehrere Lagen der Hohlfasermembranen mit dem kleineren Durchmesser aufeinanderzulegen und mit einer einzelnen Lage der Hohlfasermembranen mit größerem Durchmesser zu kombinieren. In solchen Fällen wird dann im Sinne der vorliegenden Erfindung unter einer Schicht auch der mehrlagige Aufbau der Hohlfasermembranen kleineren Durchmessers verstanden, solange dessen Dicke im wesentlichen gleich derjenigen der einlagigen Schicht der Hohlfasermembranen größeren Durchmessers ist.

Unter Hohlfasermembranen werden auch Membranhohlfasern mit mehr als einem durchgehenden, sich längs der Hohlfaserachse erstrekkenden Hohlraum verstanden, wie sie beispielsweise in der DE-OS 30 22 313 beschrieben werden, die auch als Membranhohlfaserketten mit mehreren zueinander parallelen Hohlräumen ausgebildet sein können, wie sie z. B. die DE-OS 28 42 835 offenbart. Diese können ebenfalls in Matten eingebunden sein, die dann zu ersten und zweiten Schichten aufeinandergestapelt werden, oder, sofern die Membranhohlfasern nur eine geringe Abmessung senkrecht zur Hohlfaserachse aufweisen, auch spiralförmig zu Bündeln aus ersten und zweiten Schichten gewickelt werden. Entsprechend in der Länge und Breite bemessene Abschnitte von Membranhohlfaserketten lassen sich jedoch auch direkt zu ersten und zweiten Schichten aufeinanderstapeln, wobei die einzelnen Ketten an ihrem einen Ende verschlossen und die Längsachsen der Hohlräume in den Ketten des Stapels im wesentlichen zueinander parallel sind. Insbesondere wenn die einzelnen Membranhohlfaserketten hinsichtlich ihrer Außenkontur eine angenähert rechteckige Form aufweisen, lassen sich Stapel mit sehr geringen Abständen zwischen den Schichten aufbauen und somit hohe Füllgrade ε realisieren.

In einer bevorzugten Ausgestaltung der Erfindung sind die ersten und zweiten Hohlfasermembranen die Matrix für die stoffspezifisch wirkenden Gruppen und die stoffspezifisch wirkenden Gruppen auf und/oder in den Hohlfasermembranen immobilisiert. Hierbei sind vorzugsweise sowohl die ersten als auch die zweiten Hohlfaseremembranen Matrix für stoffspezifisch wirkende Gruppen. Es ist jedoch auch möglich, daß nur auf und/oder in den ersten oder auf und/oder in den zweiten Hohlfasermembranen stoffspezifisch wirkende Gruppen immobilisiert sind. Für den bevorzugten Fall, daß sowohl die ersten als auch die zweiten Hohlfasermembranen Matrix für stoffspezifische Gruppen sind, können die stoffspezifischen Gruppen in den jeweiligen Hohlfasermembranen gleich oder unterschiedlich sein.

Das zu behandelnde Fluid strömt bei dieser Ausführungsform der erfindungsgemäßen Vorrichtung aus dem Verteilerraum in die Hohlräume der zum Verteilerraum hin geöffneten und zum Sammelraum hin geschlossenen ersten Hohlfasermembranen ein, tritt durch die Innenseite der Wände der ersten Hohlfasermembranen in die Wände ein und durchströmt diese. Hierbei wird das Fluid vorzugsweise einer ersten stoffspezifischen Behandlung in bezug auf im Fluid enthaltenen Zielsubstanzen unterzogen. Nachfolgend tritt das so behandelte Fluid über die Außenseite der Wände der ersten Hohlfasermembranen aus den ersten Hohlfasermembranen aus. Anschließend tritt das so behandelte Fluid über die Außenseite der Wände der angrenzenden zweiten Hohlfasermembranen in die Wände dieser zweiten Hohlfasermembranen ein und durchströmt diese. Hierbei findet vorzugsweise eine weitere stoffspezifische Behandlung in bezug auf im Fluid enthaltene Zielsubstanzen statt. Danach tritt der dieser weiteren stoffspezifischen Behandlung unterzogene Fluidstrom über die Innenseite der Wände der zweiten Hohlfasermembranen in die zum Sammelraum hin geöffneten und zum Verteilerraum hin geschlossenen Hohlräume dieser Hohlfasermembranen und aus diesen Hohlräumen in den angrenzenden Sammelraum ein.

Für den hier beschriebenen Fall, daß die Hohlfasermembranen die Matrix für die stoffspezifisch wirkenden Gruppen sind, liegen zur Maximierung des Püllgrades ε die Schichten vorzugsweise sich berührend direkt aneinander. Hierdurch wird das Zwischenbzw. Totvolumen zwischen den Hohlfasermembranen minimiert und das zu behandelnde Fluid strömt direkt aus den ersten Hohlfasermembranen in die zweiten Hohlfasermembranen ein. Gemäß einer bevorzugten Ausführungsform der Erfindung ist die Strömungsrichtung des die Membranwände durchdringenden Fluids im wesentlichen senkrecht zur Erstreckung der Hohlfasermembranen und die Strömungskomponente parallel zu den Hohlfasermembranen vernachlässigbar. Hierdurch wird erreicht, daß entlang der gesamten Länge der Hohlfasermembranen eine im wesentlichen gleichmäßige Nutzung der auf und/oder in den Hohlfasermembranen immobilisierten stoffspezifisch wirkenden Gruppen erfolgt.

In den Fällen, in denen die Hohlfasermembranen die Matrix für die stoffspezifisch wirkenden Gruppen sind und stoffspezifische Behandlungen in den Wänden der Hohlfasermembranen stattfinden, ist es bei der Dimensionierung der Hohlfasern wichtig, daß pro Hohlfasermembran ein möglichst hoher Anteil ihres Volumens aus semipermeabler poröser Membranwand besteht, in der die stoffspezifischen Behandlung erfolgen kann. Ein bevorzugtes Verhältnis V_{w}/V_{b} des Volumens der Wände einer solchen Hohlfasermembran V_{w}, bezogen auf das aus dem Volumen der Wände V_{w} und dem Volumen des Hohlraums Vₕ zusammengesetzten Volumen V_{b} der Hohlfasermembran liegt im Bereich 0,4 < V_{w}/V_{b} < 0,9, ein besonders bevorzugtes Verhältnis liegt im Bereich 0,6 < V_{w}/V_{b} < 0,8.

Bei einer ebenfalls bevorzugten Ausführungsform der erfindungsgemäßen Vorrichtung sind zwischen die ersten und zweiten Schichten fluiddurchlässige, d. h. für das zu behandelnde Fluid durchlässige Trägermaterialien eingebracht, die Matrix für die stoffspezifisch wirkenden Gruppen sind. In diesem Fall werden die auf den beiden Seiten des Trägermaterialschicht befindlichen, an das Trägermaterial angrenzenden Hohlfasermembranschichten als zueinander benachbart bezeichnet. Vorzugsweise sind die Trägermaterialien so ausgebildet, daß der Abstand zwischen jeweils benachbarten ersten und zweiten Schichten innerhalb der in der erfindungsgemäßen Vorrichtung enthaltenen Anordnung aus ersten Schichten, zweiten Schichten und Trägermaterialien im wesentlichen gleich ist.

Die Trägermaterialien sind vorteilhafterweise ebenfalls schichtförmig. Erfahrungsgemäß sollte die Dicke sₜ dieser Trägermaterialschichten klein sein im Vergleich zur mittleren Länge L der in der Vorrichtung befindlichen Hohlfasermembranen, gute Ergebnisse werden erzielt, wenn das Verhältnis sₜ/L< 0,1 ist. Gleichzeitig ist es für eine gleichmäßige Durchströmung der Trägermaterialien von Vorteil, wenn das Verhältnis sₜ/dₐ der Dicke sₜ der Trägermaterialschicht zum Außendurchmesser dₐ der Hohlfasermembranen im Bereich zwischen 1< sₜ/dₐ <500, bevorzugt zwischen 1<sₜ/dₐ <50 liegt. Dabei wird unter dem Außendurchmesser dₐ der Hohlfasermembran der aus dem Hohlfasermembran-Querschnitt Aₐ und dem äußeren Umfang Uₐ des Hohlfasermembran-Querschnitts Aₐ gebildete äußere äquivalente Durchmesser dₐ=4*Aₐ/Uₐ verstanden.

Vorzugsweise handelt es sich bei den Trägermaterialien um semi-permeable poröse Flachmembranen, die ein- oder mehrlagig sein können, oder um Partikel, wobei die Partikel in ein fluiddurchlässiges Vlies, eine Flachmembran oder ähnliches eingebracht sind. Die Trägermaterialien können auch in Form von textilen Flächengebilden vorliegen oder ebenfalls aus Hohlfasermembranmatten bestehen, bei denen die Hohlfasermembranen jedoch an ihren beiden Enden z.B. durch die Einbettung verschlossen sind. Auf und/oder in diesen als Matrix fungierenden Trägermaterialien sind stoffspezifisch wirkende Gruppen immobilisiert. In dem Fall, daß Trägermaterialien eingesetzt werden, wird zur Ermittlung des Füllgrades ε bei der Bestimmung des Trägermaterialvolumens auf die äußere Kontur des Trägermaterials bezogen. Der Füllgrad ε bezieht sich dann, wie bereits ausgeführt, definitionsgemäß auf die Summe der Volumina der Hohlfasermembranen und der Trägermaterialien, basierend auf deren äußeren Abmessungen.

In dem bevorzugten Fall, daß nur das Trägermaterial Matrix ist, strömt das zu behandelnde Fluid wie in dem beschriebenen Fall, in dem allein die Hohlfasermembranen Matrix für die stoffspezifisch wirkenden Gruppen sind, aus dem Verteilerraum in die Hohlräume der ersten Hohlfasermembranen, tritt durch die Innenseite der Wände der ersten Hohlfasermembranen in die Wände ein, durchströmt diese und strömt aus den Wänden der ersten Hohlfasermembranen aus, wobei es gleichmäßig auf die gesamte Matrix, d.h. das gesamte Trägermaterial verteilt wird, die es nachfolgend durchströmt. Dabei erfolgt die stoffspezifische Behandlung des Fluids. Anschließend tritt das behandelte Fluid über die Außenseite der Wände der angrenzenden zweiten Hohlfasermembranen in die Wände dieser zweiten Hohlfasermembranen ein und durchströmt diese. Danach tritt der Fluidstrom über die Innenseite der Wände der zweiten Behandlungselemente in die Hohlräume der zweiten Hohlfasermembranen ein, strömt aus diesen Hohlräumen in den angrenzenden Sammelraum und wird aus dem Gehäuse über die Auslaßeinrichtung abgeleitet.

Hierbei beschränkt sich die Funktion der ersten Hohlfasermembranen auf die eines reinen Verteilers, mittels dessen das zu behandelnde Fluid in vorteilhafter Weise gleichmäßig über das gesamte Trägermaterial verteilt wird, und die Funktion der zweiten Hohlfasermembranen auf diejenige eines Sammlers, mittels dessen das behandelte Fluid gleichmäßig aus dem gesamten Trägermaterial abgezogen wird. Auf diese Weise wird eine gleichmäßige Nutzung der gesamten auf und/oder im Trägermaterial immobilisierten stoffspezifisch wirkenden Gruppen erreicht.

In einer weiteren vorteilhaften Ausführungsform der erfindungsgemäßen Vorrichtung sind sowohl die ersten und die zweiten Hohlfasermembranen als auch die Trägermaterialien Matrix für die stoffspezifisch wirkende Gruppen. In diesem Fall kommt also den ersten und zweiten Behandlungselementen neben ihrer Verteiler- bzw. Sammelfunktion auch eine Funktion als stoffspezifisch behandelnde Elemente zu. Hierbei können die in den Hohlfasermembranen und die im Trägermaterial immobilisierten stoffspezifisch wirkenden Gruppen gleich sein oder auch verschieden. In einer vorteilhaften Ausgestaltung des erfindungsgemäßen Verfahrens wird das zu behandelnde Fluid bei der Durchströmung der Matrix, d.h. bei der Durchströmung der ersten und zweiten Hohlfasermembranen sowie des Trägermaterials, nacheinander mindestens zwei verschiedenen stoffspezifischen Behandlungen unterworfen. Natürlich ist es auch möglich, daß außer dem Trägermaterial nur die ersten oder die zweiten Hohlfasermembranen Matrix für stoffspezifisch wirkende Gruppen sind.

Auch in dem beschriebenen Fall, bei dem zwischen die ersten und die zweiten Schichten Trägermaterialien eingebracht sind, ist es von Vorteil, daß die die Matrix durchdringende Strömung ihre Hauptkomponente senkrecht zu den ersten und zweiten Schichten aufweist und die Komponente parallel zu den ersten und zweiten Schichten vergleichsweise vernachlässigbar ist. Damit werden im wesentlichen gleiche Strömungsgeschwindigkeiten und damit eine gleichmäßige Nutzung der stoffspezifisch wirkenden Gruppen entlang der Erstreckung der Hohlfasermembranen sowie entlang der Erstreckung der Trägermaterialien zwischen Verteilerraum und Sammelraum erreicht.

Bei der Durchführung des erfindungsgemäßen Verfahrens zur stoffspezifischen Behandlung von Fluiden transportiert das zu behandelnde Fluid die Zielsubstanz oder die Zielsubstanzen konvektiv durch die Matrix. Dies setzt voraus, daß die für die ersten und zweiten Hohlfasermembranen und ggfls. für die als Trägermaterial eingesetzten semipermeablen Membranen mit poröser Struktur eine Porengröße aufweisen, die einen konvektiven Transport des zu behandelnden Fluid mit der Zielsubstanz bzw. den Zielsubstanzen durch die Membranen zuläßt. Im Anwendungsfall muß die Porengröße auch auf die Größe der Zielsubstanz bzw. Zielsubstanzen abgestimmt werden, die in Form gelöster Moleküle oder Makromoleküle, aber auch in Form kleiner Teilchen mit einer Teilchengröße im Sub-Mikrometerbereich vorliegen kann, so daß kein Rückhalt der Zielsubstanz bzw. -substanzen aufgrund ihrer Größe erfolgt.

Im Hinblick auf den Einsatz der erfindungsgemäßen Vorrichtung ist es andererseits wichtig, Membranen mit möglichst kleinen Porengrößen und möglichst großem Porenvolumen bzw. möglichst großer Porosität zu verwenden, um so für die stoffspezifische Behandlung eine möglichst große innere Oberfläche der Membranen zur Verfügung zu stellen. Bevorzugt weisen die erfindungsgemäß eingesetzten Membranen eine mittlere Porosität zwischen 50 Vol.% und 90 Vol.% auf. Als mittlere Porosität wird das Verhältnis des Porenvolumens der Membran zum Membranwandvolumen verstanden, wobei sich das Membranwandvolumen aus dem Porenvolumen und dem Volumen des die Membranstruktur aufbauenden Materials zusammensetzt. Letztlich muß bei Ausführungsformen der erfindungsgemäßen Vorrichtung, die Trägermaterialien in Form von Partikeln enthalten, die Porengröße der Hohlfasermembranen so auf die Größe der Partikel abgestimmt sein, daß die Partikel durch die Membranen zurückgehalten werden. Die Membranen sind also in diesen Fällen vorteilhafterweise im wesentlichen durchlässig für die Zielsubstanz bzw. Zielsubstanzen und im wesententlichen undurchlässig für die Partikel des Trägermaterials.

Dabei können die ersten und zweiten Hohlfasermembranen auch unterschiedliche Porengrößen aufweisen, insbesondere dann, wenn die erfindungsgemäße Vorrichtung immer in der gleichen Richtung durchströmt wird.

Die Anforderungen an den Aufbau der Membran, d.h. an ihre Struktur und Porengrößenverteilung über der Membrandicke resultieren aus dem jeweiligen Anwendungsfall der stoffspezifischen Behandlung. Die Membranstruktur kann über die Dikke isotrop sein, d.h. innerhalb der Membranstruktur sind die Porendurchmesser im wesentlichen konstant, sie kann aber auch anisotrop, symmetrisch oder auch asymmetrisch sein. Bevorzugt werden jedoch Membranen mit in allen Raumrichtungen im wesentlichen isotroper Porenstruktur eingesetzt. Hierbei werden unter im wesentlichen isotropen Porenstrukturen solche Strukturen verstanden, bei denen sich die Porengröße in den Erstreckungsrichtungen der Membranen um maximal etwa den Faktor 10 ändert. Derartige im wesentlichen isotrope Strukturen zeichnen sich dadurch aus, daß sie eine große innere Oberfläche aufweisen, an die eine große Anzahl von stoffspezifisch wirkendenden Gruppen immobilisiert werden kann. Desweiteren führt eine solche Struktur in der Anwendung zu einer gleichmäßigen Nutzung dieser Gruppen.

Bevorzugt werden Membranen mit einem mittleren Porendurchmesser zwischen 0,01 und 10 µm, besonders bevorzugt solche mit einem mittleren Porendurchmesser zwischen 0,1 und 3 µm eingesetzt.

Zur Bestimmung des mittleren Porendurchmessers werden je nach Größe des Porendurchmessers und je nach Membranstruktur unterschiedliche Verfahren angewandt. Für im wesentlichen isotrope Porenstrukturen werden Porendurchmesser indirekt durch ein Filtrationsexperiment bestimmt, indem eine wässrige Dextranlösung mit einer vorgegebenen Größenverteilung von Dextranmolekülen durch die Membran filtriert wird. Aus dem dabei gemessenen relativen Rückhalt als Funktion der nominalen Moleküldurchmesser wird die Porendurchmesserverteilung und daraus der mittlere Porendurchmesser berechnet. Dieses Verfahren wird beispielsweise von K. Sakai, J. Membrane Science 96 (1994), 91-130, oder von Shin-ichi Nakao, J. Membrane Science 96 (1994) 131-165, für Dialyse- bzw. Filtrationsmembranen beschrieben.

Für anisotrope Membranen, die z.B. eine Schicht mit dichterer Porenstruktur aufweisen, werden zur Bestimmung der mittleren Porendurchmesser innerhalb der dichteren Schicht ebenfalls die zitierten Bestimmungsverfahren basierend auf Filtrationsexperimenten herangezogen. Zur Bestimmung der mittleren Porendurchmesser der grobporigeren Bereiche der anisotropen Membranen wird ein bildanalytisches Verfahren nach L. Zeman u.a., J. Membrane Science 71 (1992), 221-231 eingesetzt. Dieses eignet sich für einen Porengrößenbereich zwischen 0,1 µm und 10 µm, naturgemäß sowohl für isotrope als auch für anisotrope Porenstrukturen.

In der erfindungsgemäßen Vorrichtung bzw. zur Durchführung des erfindungsgemäßen Verfahrens werden vorzugsweise poröse Membranen mit großer innerer Oberfläche eingesetzt. Bewährt haben sich poröse Membranen mit einer BET-Oberfläche zwischen 2 und 300 m² je cm³ Membranvolumen, bestens bewährt haben sich solche Membranen mit einer BET-Oberfläche zwischen 4 und 30 m² je cm³ Membranvolumen. Das auf Stickstoffadsorptionsmessung basierende BET-Verfahren zur Bestimmung der Oberfläche poröser Membranstrukturen ist von K. Kaneko, J. Membrane Science 96 (1994), 59-89 beschrieben.

Abhängig von der gewünschten Anwendung der erfindungsgemäßen Vorrichtung bzw. des erfindungsgemäßen Verfahrens können die die ersten Hohlfasermembranen und die zweiten Hohlfasermembranen und die gegebenenfalls eingesetzten Flachmembranen gleich sein oder auch unterschiedlich. Unterschiede können sich beispielsweise auf ihre Porenstruktur oder ihre Porendurchmesser beziehen, sie können sich jedoch auch auf in den Membranen enthaltene Gruppen beziehen, die zur Wechselwirkung mit in dem zu behandelnden Fluid enthaltenen Zielsubstanzen bestimmt sind.

Für den Fall, daß als Trägermaterial Partikel eingesetzt werden, sind diese zweckmäßigerweise z.B. in ein fluiddurchlässiges Vlies, eine Flachmembran oder ähnliches eingebracht, etwa um die Position der Partikel zwischen den ersten und zweiten Schichten zu stabilisieren und eine gleichmäßige Verteilung der Partikel zwischen den Schichten oder auch einen gleichmäßigen Abstand zwischen den Schichten zu erreichen. Das fluiddurchlässige Vlies oder z.B.die Flachmembran kann dabei eine relativ grobe Struktur aufweisen; wesentlich ist allein, daß die Partikel problemlos in das Vlies oder die Flachmembran eingebracht werden können und dort im späteren Einsatz stabil positioniert sind.

Derartige Partikel können z.B. solche sein, wie sie gemäß dem Stand der Technik in Säulen zur Affinitätschromatographie eingesetzt werden. Hierbei kann die Struktur der Partikel dicht sein, so daß im zu behandelnden Fluid enthaltene Zielsubstanzen z.B. nur durch einen Lösevorgang oder durch Diffusion zu im Inneren der Partikel immobilisierten stoffspezifisch wirkenden Gruppen gelangen können. Bevorzugt weisen die Partikel jedoch eine poröse Struktur auf, und ein konvektiver Transport der Zielsubstanzen zu den immobilisierten stoffspezifisch wirkenden Gruppen auch an der inneren, durch die Poren definierten Oberfläche ist möglich. Die Porendurchmesser dieser Partikel liegt vorzugsweise im Bereich zwischen 0,01 und 10 µm und besonders bevorzugt zwischen 0,1 und 3 um.

Unter Partikeln werden aber auch Makromoleküle wie Proteine (z.B. Albumin) verstanden, an die beispielsweise kleinere Moleküle (z.B. Bilirubin) gebunden sein können.

Ihre Gestalt kann kugelförmig sein oder jede andere Form annehmen, wie z.B. ellipsoidisch oder stäbchenförmig. Die Partikel sollten eine Größe aufweisen, die im Vergleich zum Außendurchmesser der Hohlfasermembranen klein ist. Vorzugsweise ist das Verhältnis dₚ/dₐ aus dem mittleren Partikeldurchmesser dp zum Außendurchmesser dₐ der Hohlfasermembranen kleiner als 0,2. Hierbei ist der mittlere Partikeldurchmesser dₚ definiert als der arithmetische Mittelwert der Partikeldurchmesser der im Gehäuse enthaltenen Partikel, wobei bei nicht-kugelförmigen Partikeln als Partikeldurchmesser der Äquivalentdurchmesser einer Kugel gleichen Volumens verwendet wird. Der Außendurchmesser der Hohlfasermembranen dₐ ist gleich dem auf den äußeren Umfang Uₐ des Hohlfasermembran-Querschnitts Aₐ bezogene äußere äquivalente Durchmesser dₐ=4*Aₐ/Uₐ.

Wie ausgeführt ist es von Vorteil, wenn die Strömung, die die Hohlfasermembranen und die gegebenenfalls eingesetzte Trägermaterialien durchdringt, ihre Hauptkomponente senkrecht zu den ersten und zweiten Schichten aufweist und die Komponente parallel zu den ersten und zweiten Schichten vergleichsweise vernachlässigbar ist. Daher weisen die ersten und zweiten Hohlfasermembranen bzw. die eingebrachten Trägermaterial-Schichten senkrecht zu ihrer Längsachse bzw. senkrecht zu ihrer flächigen Erstreckung vorzugsweise eine um mindestens den Faktor 2, besonders bevorzugt um den Faktor 5 bis 50 größere Permeabilität auf als in Längsrichtung der Hohlfasermembranen bzw. parallel zur flächigen Erstreckung des Trägermaterials.

Die erfindungsgemäße Vorrichtung weist als weiteren Vorteil auf, daß die "Säulenhöhe", d.h. die Strecken, die der zu behandelnde Fluidstrom in der die stoffspezifisch wirkenden Gruppen enthaltenden Matrix zurücklegen muß, z.B. gegenüber partikelgefüllten Chromatographiesäulen vergleichsweise gering ist, und daraus resultierend auch die entstehenden Druckverluste reduziert sind. Beispielsweise handelt es sich bei diesen Strecken allein um die jeweiligen Wände der Hohlfasermembranen sowie die Dicke der Trägermaterialschicht, die ihrerseits, wie beschrieben, im Vergleich zur Länge der Hohlfasermembranen und damit zur Querschnittsabmessung des Gehäuses in Längserstreckung der Hohlfasermembranen dünn gehalten wird. Aufgrund der geforderten hohen Füllgrade liegt gleichzeitig eine hohe Volumendichte an stoffspezifisch wirkenden Gruppen im Gehäuse der erfindungsgemäßen Vorrichtung vor, und aufgrund der schichtweisen Anordnung der Hohlfasermembranen erfolgt trotz der hohen Volumendichte eine gleichmäßige Nutzung dieser Gruppen.

Die Form des inneren Querschnitts des Gehäuses, in dem die Schichten aus ersten und zweiten Hohlfasermembranen zusammen mit dem gegebenenfalls vorhandenen Trägermaterial angeordnet sind, kann beliebig sein. Bevorzugt werden jedoch Gehäuse mit quadratischem, rechteckigem oder auch rundem Innenquerschnitt eingesetzt, wobei hier unter dem Innenquerschnitt der Querschnitt des Gehäuses senkrecht zur Erstreckung der in ihm befindlichen Hohlfasermembranen zu verstehen ist. Bei einem Aufbau der Anordnung von ersten und zweiten Hohlfasermembranen aus aufeinandergestapelten oder zick-zack-förmig gefalteten ebenen ersten und zweiten Schichten bietet es sich an, Gehäuse mit rechteckigem oder quadratischem Querschnitt zu verwenden. Bei spiralförmig um eine Wickelachse gewickelten ersten und zweiten Schichten hingegen ist es zweckmäßig, ein Gehäuse mit rundem Querschnitt zu verwenden.

Es ist auch möglich, daß ein Gehäuse mehrere Module enthält. Hierbei werden unter Modulen Segmente mit einer Mehrzahl von ersten und zweiten Schichten mit gegebenenfalls dazwischenliegendem Trägermaterial verstanden. Derartige Segmente weisen beispielsweise eine quaderförmige Kontur und einen solchen Aufbau auf, daß die Enden der die Schichten aufbauenden ersten und zweiten Hohlfasermembranen in Vergußmassen in der Weise eingebettet sind, daß die ersten Hohlfasermembranen mit ihrem offenen Ende aus der einen, ersten Vergußmasse ausmünden und mit ihrem geschlossenen Ende in der gegenüberliegenden zweiten Vergußmasse eingebettet sind und daß die offenen Enden der zweiten Hohlfasermembranen mit ihren offenen Enden aus der zweiten Vergußmasse ausmünden und mit ihrem geschlossenen Ende in der ersten Vergußmasse eingebettet sind. Die Vergußmassen können z.B. durch einen rechteckigen Rahmen auf Abstand gehalten werden, wodurch gleichzeitig eine Begrenzung und Abdichtung des Moduls an den Seiten erfolgt. Ober- und Unterseite des Moduls können offen oder ebenfalls geschlossen sein.

Diese Module können in Gehäusen der erfingungsgemäßen Vorrichtung übereinander angeordnet sein und zueinander parallel geschaltet werden, so daß die einzelnen Module von Teilströmen des zu behandelnden Fluids gleichzeitig durchströmt werden. Sie können auch übereinander angeordnet, jedoch hintereinander geschaltet werden, so daß das zu behandelnde Fluid die einzelnen Module kaskadenförmig nacheinander durchströmt. Sie können natürlich auch hintereinander in einem entsprechend langen Gehäuse, z.B. einem Rohr, angeordnet sein, und das Rohr wiederum kann spiralförmig aufgewickelt sein.

Die erfindungsgemäße Vorrichtung bzw. das erfindungsgemäße Verfahren kann mit Erfolg zu verschiedensten stoffspezifischen Behandlungen von Fluiden verwendet werden. Im Hinblick auf das jeweilige Behandlungsverfahren können auch mehrere verschiedene stoffspezifisch wirkende Gruppen auf und/oder in der Matrix immobilisiert sein, die spezifisch mit verschiedenen Zielsubstanzen wechselwirken. Es können auch für die ersten und zweiten Hohlfasermembranen und die gegebenenfalls als Trägermaterial eingesetzte Flachmembran unterschiedliche Membranen mit unterschiedlichen stoffspezifisch wirkenden Gruppen zusammen eingesetzt werden, wenn es die Anwendung erfordert. Auf diese Weise können in der Matrix unterschiedliche stoffspezifische Behandlungen erfolgen.

So gibt es Anwendungen, bei denen eine Gruppe von zu entfernenden Zielsubstanzen beispielsweise teilweise positiv als auch zum anderen Teil negativ geladen ist. Derartige Gruppen von Zielsubstanzen können aus dem zu behandelnden Fluid entfernt werden, indem zur Durchführung des erfindungsgemäßen Verfahrens z.B. Membranen mit stoffspezifisch wirkenden Gruppen mit unterschiedlicher Ladung eingesetzt werden. Als Beispiel sei die Entfernung Zytokin-induzierender Substanzen aus Infusionslösungen oder Dialysat genannt. Es ist bekannt, daß diese Zytokininduzierenden Substanzen sowohl positiv als auch negativ geladen sind. Der Kontakt dieser Substanzen mit weißen Blutzellen stimuliert diese zur Produktion von Zytokinen mit unerwünschten Nebeneffekten für den Patienten. Durch Einsatz beispielsweise von ersten Hohlfasermembranen mit anionischen und zweiten Hohlfasermembranen mit kationischen Eigenschaften in einer entsprechenden erfindungsgemäßen Vorrichtung kann die gesamte Zielgruppe adsorptiv entfernt werden.

Natürlich sind auch weitere Kombinationen verschiedener stoffspezifischer Behandlungen mittels der erfindungsgemäßen Vorrichtung bzw. mittels des erfindungsgemäßen Verfahrens möglich, wie beispielsweise Reversphasenchromatographie, Adsorption an hydrophoben Oberflächen oder Affinitätschromatographie. In Einzelfällen läßt sich auch eine solche Behandlung des Fluids über Wechselwirkung mit den stoffspezifisch wirkenden Gruppen kombinieren mit einer Vorfiltration des Fluids, die dann in den ersten Hohlfasermembranen erfolgt, um so z.B. bestimmte Bestandteile aus dem zu behandelnden Fluid zurückzuhalten, die nicht mit den stoffspezifisch wirkenden Gruppen in Kontakt kommen sollen.

In einer bevorzugten Ausgestaltung des erfindungsgemäßen Verfahrens wird das zu behandelnde Fluid rezirkuliert, und es durchläuft das Behandlungsverfahren mehrfach, bis ein gewünschter Behandlungsgrad erreicht ist.

Gemäß einer besonders bevorzugten Ausgestaltung der Erfindung handelt es sich bei den stoffspezifisch wirkenden Gruppen um Liganden zur affinen Trennung von Ligaten aus zu behandelnden Flüssigkeiten oder um Katalysatoren, wobei unter Katalysatoren auch Biokatalysatoren wie z.B. Enzyme zu verstehen sind. Bevorzugte erfindungsgemäße Verfahren sind Verfahren zur Reinigung/Trennung von Ligaten aus einer ligathaltigen Flüssigkeit, wobei eine Matrix ausgewählt wird, auf und/oder in der Liganden für besagte Ligaten immobilisiert sind. Verfahren zur katalytischen Behandlung von Flüssigkeiten, wobei eine Matrix ausgewählt wird, auf und/oder in der Katalysatoren immobilisiert sind. Desweiteren sind bevorzugte Verfahren solche zur katalytischen Behandlung von Flüssigkeiten, wobei eine Matrix ausgewählt wird, auf und/oder in der Katalysatoren immobilisiert sind. Zu den katalytischen Verfahren zählen auch biokatalytische Verfahren wie z.B. enzymatische Verfahren.

Zur Immobilisierung stoffspezifisch wirkender Gruppen auf und/oder in der Matrix können die in der Literatur beschriebenen Verfahren eingesetzt werden. Auch hinsichtlich der in bezug auf die jeweilige stoffspezifische Fluidbehandlung verwendbaren stoffspezifisch wirkenden Gruppen kann auf die in der Literatur beschriebenen Verfahren zurückgegriffen werden. Verschiedene Möglichkeiten der Immobilisierung der stoffspezifisch wirkenden Gruppen kommen in Betracht, sowohl in bezug auf den Ort, wo sie immobilisiert sind, als auch in bezug auf die Art und Weise ihrer Immobilisierung.

So können diese stoffspezifisch wirkenden Gruppen an die Matrix adsorptiv oder über kovalente Bindungen gekoppelt sein. Diese Kopplung an die Matrix kann sowohl vor Einbau in das Gehäuse als auch nach Einsetzen in das Gehäuse der erfindungsgemäßen Vorrichtung erfolgen. Hierbei können in Abstimmung auf den jeweiligen Anwendungsfall die stoffspezifisch wirkenden Gruppen beispielsweise im wesentlichen homogen an die gesamte Oberfläche der Matrix, d.h. sowohl an die äußeren als auch an die inneren, z.B. durch Poren gebildeten Oberflächen gekoppelt, d.h. auf und in der Matrix immobilisiert sein. Es kann aber auch erforderlich sein, daß die stoffspezifisch wirkenden Gruppen nur an einem Teil dieser Oberflächen immobilisiert sind.

Es kann auch ein direkter Einbau von stoffspezifisch wirkenden Gruppen in das Matrixmaterial erfolgen, im Falle von Matrices aus polymeren Materialien etwa durch Modifikation des Polymermaterials mit beispielsweise ionischen, hydrophilen oder hydrophoben Gruppen oder durch Einsatz von Polymerblends, bei denen mindestens eine Polymerkomponente stoffspezifisch wirkende Gruppen aufweist.

Eine weitere Möglichkeit z.B. bei membranförmigen Matrices besteht darin, stoffspezifisch wirkende Gruppen oder auch solche Gruppen aufweisende Trägersubstanzen oder Partikel in das Porensystem einer Membran beim Herstellungsverfahren der Membran einzulagern oder nachträglich in die fertige Membran z.B. einzuschwemmen. In letzterem Fall weist die Membran zweckmäßigerweise eine asymmetrische Struktur sowie gegebenenfalls eine Haut auf, wobei die Öffnungen der Haut bzw. die Poren der feinporigeren Seite der Membran so bemessen sind, daß die stoffspezifisch wirkenden Gruppen bzw. die genannten Trägersubstanzen oder Partikel nicht hindurchtreten können. Hierbei wird das Einschwemmen sowie die nachfolgende stoffspezifische Fluidbehandlung so durchgeführt, daß die Stoffströme von der offenporigeren Seite der Membran in die Membran eintreten und dadurch die stoffspezifisch wirkende Gruppen tragenden Substanzen oder Partikel durch die weniger offenporige Seite zurückgehalten werden.

In den Fällen, in denen in Membranen stoffspezifisch wirkende Gruppen immobilisiert sind, ist die Porengröße der verwendeten Membran so zu wählen, daß auch trotz der in den Poren immobilisierten stoffspezifisch wirkenden Gruppen die Zielsubstanzen konvektiv von dem zu behandelnden Fluid durch die Membran transportiert werden kann.

Hinsichtlich des Materials, aus dem die ersten und zweiten Hohlfasermembranen und das gegebenenfalls eingesetzte Trägermaterial aufgebaut sind, sind keinerlei Einschränkungen gegeben. So können die Membranen und die Trägermaterialien aus anorganischen Materialien wie Glas, Keramik, SiO₂, Kohlenstoff oder Metall, aus organischen Polymeren oder Mischungen daraus eingesetzt werden. Die Polymeren können hydrophilen und/oder hydrophoben Charakter aufweisen, sie können ausgewählt sein aus der Gruppe der cellulosischen Polymeren, wie z.B. Cellulose oder regenerierte Cellulose, modifizierte Cellulose, wie z.B. Celluloseester, Celluloseäther, aminmodifizierte Cellulosen, sowie Mischungen von cellulosischen Polymeren, aus der Gruppe der synthetischen Polymeren wie z.B. Polyacrylnitril und entsprechenden Copolymere, Polyurethan enthaltende Polymere, Polyarylsulfone und Polyarylethersulfone, wie z.B. Polysulfon oder Polyethersulfon, Polyvinylidenfluorid, Polytetrafluorethylen, wasserunlösliche Polyvinylalkohole, aliphatische und aromatische Polyamide, Polyimide, Polyetherimide, Polyester, Polycarbonate, Polyolefine, wie Polyethylen, Polypropylen, Polyvinylchlorid, Polyphenylenoxid, Polybenzimidazole und Polybenzimidazolone, sowie daraus gewonnenen Modifikationen, Blends, Mischungen oder Copolymeren dieser Polymeren. Diesen Polymeren bzw. Polymergemischen können weitere Polymere wie z.B. Polyethylenoxid, Polyhydroxyether, Polyethylenglykol, Polyvinylpyrrolidon, Polyvinylalkohol oder Polycaprolacton, oder anorganische Stoffe wie z.B. SiO₂ als Zusatzstoffe beigemischt werden. Im Einzelfall kann die Membran auch z.B. einer Oberflächenmodifikation unterzogen worden sein, um bestimmte Eigenschaften der Membranoberfläche z.B. in Form bestimmter funktioneller Gruppen einzustellen.

Besonders gute Erfahrungen wurden mit Membranen aus lösemittelstabilen und pH-Wert-stabilen Polymeren gemacht, insbesondere mit Membranen aus Polytetrafluorethylen oder Polyvinylidenfluorid sowie daraus gewonnenen Modifikationen, Blends, Mischungen oder Copolymeren. Derartige Membranen werden beispielsweise in der DE-A-39 23 128 beschrieben. Auch Cellulosen und Polyamide sowie daraus gewonnene Modifikationen, Blends, Mischungen oder Copolymere haben sich besonders bewährt, da sie hinreichend laugestabil sind und in einfacher Weise Liganden kovalent an sie gebunden werden können.

Die Materialien, aus denen die ersten und die zweiten Hohlfasermembranen sowie gegebenenfalls die Trägermaterialien bestehen, können gleich oder auch unterschiedlich sein. Bevorzugt wird die Verwendung eines einheitlichen Materials für die Membranen und die gegebenenfalls eingesetzten Trägermaterialien. Im Einzelfall können auch die ersten und zweiten Hohlfasermembranen aus unterschiedlichen Materialien bestehen.

Zur Reinigung/Trennung von Ligaten aus einer ligathaltigen Flüssigkeit mittels Affinitätstrennung oder Affinitätschromatographie sind zahlreiche Anwendungen bekannt. Unter Affinitätschromatographie werden hier biospezifische Adsorptionen und auch Trennverfahren wie z.B. die Ionenaustauscherchromatographie, die Metallchelatchromatographie, die hydrophobe Chromatographie, Kovalentchromatographie oder auch die direkte Sorption von Molekülen auf ein spezifisches Adsorbermaterial verstanden.

Interessante Anwendungen beziehen sich auf die Reinigung von monoklonalen oder polyklonalen Antikörpern, auf die Entfernung von Proteasen zur Stabilisierung von biologischen Flüssigkeiten, auf die Gewinnung oder therapeutische Entfernung von Blutplasmabestandteilen aus Blutplasma, auf die Entfernung von Pyrogenen aus biologischen oder pharmazeutischen Flüssigkeiten, auf die Trennung von Enantiomeren oder auf die Isolierung von Enzymen, um nur einige Beispiele zu nennen.

Liganden können in dem hier gebrauchten Sinne je nach Anwendung nicht-spezifisch, gruppenspezifisch oder spezifisch wirken (s. E. Klein, "Affinity Membranes", John Wiley & Sons, Inc., 1991). Derartige Liganden sind beispielsweise Lipoproteine - wie z.B. HDL's - Lysozym, monoklonale Antikörper, polyklonale Antikörper, Peptide, antigene Substanzen, Glycoproteine, Protein A, Protein G, Enzyme, Rezeptorproteine, Wachstumsfaktoren für Zellen, Hormone, Regulationsproteine, Inhibitoren, Kofaktoren, Heparin, Protamin, Poly-L-Lysine, Biotin, Avitin, Aminosäuren wie Tryptophan, L-Histidine oder Antibiotika. Desweiteren können die Liganden auch Salze wie z.B. Fe₄[Fe(CN)₆]₃ oder Farbstoffe sein. Sie können aber auch hydrophile Gruppen oder ionische Gruppen in der Oberfläche des Membranmaterials selbst sein oder an die Oberfläche gebundene Polymere sein. Beispielhaft, jedoch ohne hierauf einzuschränken, sei auch auf die in der WO 90/04609, WO 90/05018 und EP-A-0 565 978 oder auf die in E. Klein, "Affinity Membranes", John Wiley & Sons, Inc., 1991, genannten Beispiele verwiesen.

Ohne an dieser Stelle die Möglichkeiten erschöpfend aufzuzählen, können die Liganden z.B. durch Modifikation der Oberflächen der Matrix erzeugt werden, sie können direkt oder über Abstandsmoleküle (Spacer), sie können aber auch über Tentakelsysteme oder Ketten an die Oberfläche gebunden werden, wobei an jede Kette bzw. an jedes Tentakelsystem mehrere Liganden gebunden sein können.

Um die Kapazität insbesondere von Ionenaustauschermatrices zu erhöhen, sind verschiedene an sich bekannte Methoden anwendbar,
wobei die Anzahl der stoffspezifisch wirkenden Gruppen, d.h. der Liganden, auf der Oberfläche der Matrices erhöht wird. Bevorzugt sind die Liganden über Moleküle langkettiger Linearpolymerer an die Membran gekoppelt, wobei die Moleküle der langkettigen Linearpolymeren eine Mehrzahl von Liganden tragen. Die Verwendung langkettiger Linearpolymerer mit Seitenarmen, sogenannter Tentakeln, wobei die Liganden an den Seitenarmen sitzen, beschreibt z.B. W. Müller, J. Chromatogr., Bd. 510 (1990), S. 133. Die Herstellung solcher Tentakel ist beispielsweise bei Tsuneda u.a. (Biotechnol. Prog., Bd. 10 (1994), S. 76-81, und J. Chromatogr. Bd. A 689 (1995), S. 211-218) beschrieben und kann über eine strahleninduzierte Pfropfpolymerisation von einem eine Epoxidgruppe enthaltenden Monomer, wie z.B. Glycidylmethacrylat, mit anschließender chemischer Umsetzung in SO₃H-Gruppen oder Diethylamino-Gruppen erfolgen. Ein anderes Verfahren zur Pfropfung von stickstoffhaltigen polymeren Flachmembranen, das zur Erhöhung der Ionenaustauscherkapazität der erfindungsgemäßen Membran-Behandlungselemente eingesetzt werden kann, wird in der EP-A-0 490 940 beschrieben.

Membranen, die mit polymerisierbaren Doppelbindungen derivatisierte Polyamide gemäß der DE-OS-195 01 726 enthalten, sind für die erfindungsgemäße Vorrichtung bzw. zur Durchführung des erfindungsgemäßen Verfahrens bestens geeignet. Diese derivatisierten Polyamide sind erhältlich durch Umsetzung des Polyamids in einer wäßrigen Lösung mit einer Verbindung, die sowohl eine polymerisierbare Doppelbindung als auch einen Oxiranring enthält, und können zu Blockpolymerisaten mit verbesserten Eigenschaften umgesetzt werden.

Für Anwendungen im Bereich der enzymatischen oder allgemein katalytischen Behandlung von Flüssigkeiten können Matrices ausgewählt werden, auf und/oder in denen nach an sich bekannten Methoden Enzyme oder Katalysatoren immobilisiert sind. Anwendungen im Bereich der enzymatischen Flüssigkeitsbehandlung sind z.B. die enzymatische Veresterung von Ethylglycosid, die enzymatische Hydrolyse von Stärke über Amyloglucosidase, die enzymatische Hydrolyse von Enantiomeren, pflanzlichen Ölen, tierischen Ölen, wie z.B. Fischöl, oder Triglyceriden über Lipasen, der enzymatische Abbau von Proteinen über Proteinasen, der Lactoseabbau in der Milch über Lactase oder der Abbau von Blutbestandteilen über entsprechende Enzyme wie beispielsweise Harnstoff über Urease. Auch Anwendungen, wie sie in der US-A-4 061 141 beschrieben werden, fallen hierunter. Andere Enzyme sowie deren Anwendung und Möglichkeiten der Immobilisierung sind in Ullmanns Encyklopädie der technischen Chemie, 4. Auflage, Bd. 10, S. 475-561, Verlag Chemie, Weinheim 1975, beschrieben. Angaben zu Katalysatoren sowie zu deren Immobilisierung in Membranstrukturen, wie sie auch im Rahmen der vorliegenden Erfindung eingesetzt werden können, sind beispielsweise in der US-A-4 266 026 zu finden.

Die Erfindung wird nachfolgend anhand der Zeichnungen näher erläutert. Es zeigen in vereinfachter schematischer Darstellungsweise:
- Fig. 1:: Längsschnitt durch eine erfindungsgemäße Vorrichtung mit ersten und zweiten Hohlfasermembranen, die gleichzeitig Matrix sind.
- Fig. 2:: Segment aus zwei übereinanderliegenden Hohlfasermatten.
- Fig. 3:: Querschnitt eines spiralförmig um eine Wickelachse gewickelten Paares einer ersten und einer zweiten Hohlfaserschicht.
- Fig. 4:: Querschnitt durch eine Anordnung von ersten und zweiten Hohlfasermembranen mit einer alternierenden Reihenfolge von ersten und zweiten Schichten.
- Fig. 5:: Querschnitt durch eine Anordnung von ersten und zweiten Schichten mit symmetrischen Gruppierungen aus jeweils drei übereinanderliegenden Schichten.
- Fig. 6:: Längsschnitt durch eine erfindungsgemäße Vorrichtung mit zwischen den ersten und zweiten Schichten als Trägermaterial eingebrachten Flachmembranen.
- Fig. 7:: Querschnitt durch eine Anordnung von alternierenden ersten und zweiten Schichten senkrecht zur Erstreckung der Hohlfasermembranen mit zwischen den ersten und zweiten Schichten als Trägermaterial eingebrachten Flachmembranen.
- Fig. 8:: Querschnitt durch eine Anordnung von ersten und zweiten Schichten mit symmetrischen Gruppierungen aus jeweils drei übereinanderliegenden Schichten mit zwischen den ersten und zweiten Schichten als Trägermaterial eingebrachten Flachmembranen.
- Fig. 9:: Längsschnitt durch eine erfindungsgemäße Vorrichtung, bei der zwischen die ersten und zweiten Schichten in Vliese eingelagerte Partikel als Trägermaterial eingebracht sind.
- Fig. 10:: Ausschnitt aus einem Längsschnitt durch eine erfindungsgemäße Vorrichtung mit in einem Vlies eingelagerten Partikeln als Trägermaterial.
- Fig. 11:: Segment einer stapelförmigen Anordnung von Membranhohlfaserketten.

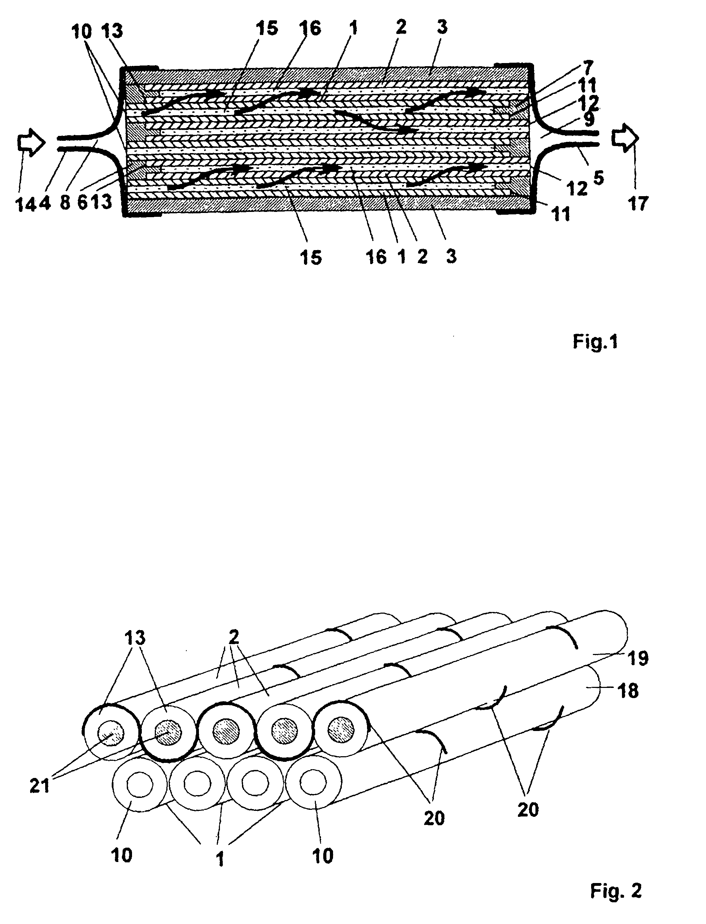

Figur 1 zeigt einen Längsschnitt durch eine erfindungsgemäße Vorrichtung mit ersten Hohlfasermembranen 1 und zweiten Hohlfasermembranen 2, die in diesem Fall die Matrix für die immobilisierten stoffspezifisch wirkenden Gruppen sind. Die ersten und zweiten Hohlfasermembranen befinden sich in einem Gehäuse 3 mit einer Einlaßeinrichtung 4 für das zu behandelnde Fluid und einer Auslaßeinrichtung 5 für das behandelte Fluid. Die Hohlfasermembranen sind hierbei in ersten und zweiten Schichten angeordnet, die sich in dieser Darstellung längs der Hohlfasermembranen sowie senkrecht zur Zeichenebene erstrecken. Die ersten und zweiten Hohlfasermembranen 1,2 sind mit ihren Enden in Vergußmassen 6,7 eingebettet, die zusammen mit der Einlaßeinrichtung 4 einen Verteilerraum 8 bzw. zusammen mit der Auslaßeinrichtung 5 einen Sammelraum 9 begrenzen.

Die ersten Hohlfasermembranen 1 sind mit ihren dem Verteilerraum 8 zugewandten Enden 10 in der dem Verteilerraum 8 zugewandten Vergußmasse 6 so eingebettet, daß sie durch die Vergußmasse 6 hindurchtreten und zum Verteilerraum 8 hin geöffnet sind. Mit ihren anderen Enden 11 sind die ersten Hohlfasermembranen in die Vergußmasse 7 so eingebettet, daß diese Enden 11 durch die Vergußmasse 7 gegenüber dem Sammelraum 9 abgeschlossen werden. Entsprechend sind die zweiten Hohlfasermembranen 2 mit ihren dem Sammelraum 9 zugewandten Enden 12 so in der dem Sammelraum 9 zugewandten Vergußmasse 7 eingebettet, daß sie durch die Vergußmasse 7 hindurchtreten und zum Sammelraum 9 hin geöffnet sind. Mit ihren anderen Enden 13 sind die zweiten Hohlfasermembranen 2 in die Vergußmasse 6 so eingebettet, daß diese Enden 13 durch die Vergußmasse 6 gegenüber dem Verteilerraum 8 abgeschlossen werden. Die ersten Hohlfasermembranen 1 und die zweiten Hohlfasermembranen 2 sind also als dead-end Membranelemente ausgeführt, deren geöffnete Enden einander gegenüberliegen.

Die ersten und zweiten Schichten sind in einer zueinander alternierenden Abfolge angeordnet und liegen zueinander benachbart und sich berührend übereinander, so daß ein hoher Füllgrad ε erreicht wird, der sich in diesem Fall als das Verhältnis des Volumens der Hohlfasermembranen, bezogen auf deren Außendurchmesser, zum Gehäusevolumen ergibt.

In einer Ausgestaltung des erfindungsgemäßen Verfahrens strömt das zu behandelnde Fluid, dargestellt durch den Pfeil 14, durch die Einlaßeinrichtung 4 der Vorrichtung gemäß Figur 1 in den Verteilerraum 8 und aus diesem in die Hohlräume 15 der ersten Hohlfasermembranen 1 ein, tritt in deren Wände ein und durchströmt diese. Hierbei wird das Fluid einer stoffspezifischen Behandlung unterzogen. Danach verläßt das so behandelte Fluid die Wände der ersten Hohlfasermembranen 1, tritt anschließend über die Außenseite der Wände der angrenzenden zweiten Hohlfasermembranen 2 in deren Wände ein und durchströmt diese. Hierbei findet eine weitere stoffspezifische Behandlung in bezug auf im Fluid enthaltene Zielsubstanzen statt. Nachfolgend tritt der dieser weiteren stoffspezifischen Behandlung unterzogene Fluidstrom über die Innenseite der Wände der zweiten Hohlfasermembranen 2 in deren Hohlräume 16 ein, strömt aus diesen Hohlräumen 16 in den angrenzenden Sammelraum 9 und verläßt die Vorrichtung über die Auslaßeinrichtung 5 als behandeltes Fluid, dargestellt durch den Pfeil 17.

In Figur 2 ist schematisch ein Segment einer ersten Schicht 18 und einer zweiten Schicht 19 dargestellt, die aus Matten von mittels Querfäden 20 miteinander verbundenen ersten bzw. miteinander verbundenen zweiten Hohlfasermembranen 1,2 ausgebildet sind. Die Enden 10 der ersten Hohlfasermembranen sind zur Betrachterseite hin geöffnet; über diese Enden würde bei Einsatz dieser Schichten in einer erfindungsgemäßen Vorrichtung das zu behandelnde Fluid in die Hohlräume der ersten Hohlfasermembranen 1 einströmen. Die Enden 13 der zweiten Hohlfasermembranen 2 hingegen sind an dieser Seite z.B. mit einem Stopfen 21 verschlossen. Die die Hohlfaserenden umschließende Vergußmasse ist in dieser Figur nicht dargestellt.

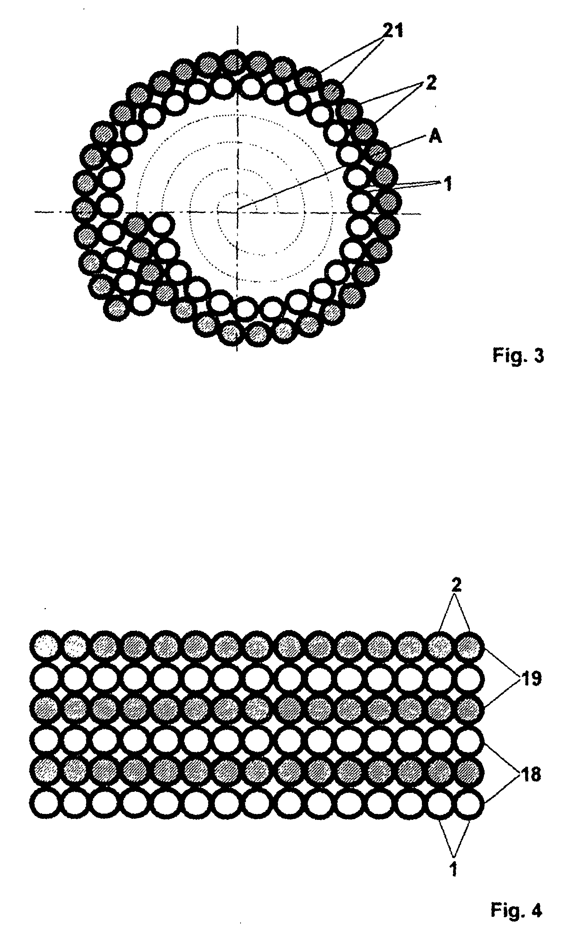

Eine derartige Anordnung einer ersten Schicht von ersten Hohlfasermembranen 1 und einer zweiten Schicht von Hohlfasermembranen 2 kann, wie dies in der Figur 3 schematisch dargestellt ist, um eine zu den Hohlfasermembranen parallele und in dieser Darstellung zur Zeichenebene senkrechte Wickelachse A spiralförmig gewickelt werden, so daß ein Bündel mit spiralförmigem Lagenaufbau entsteht. In der Figur 3 sind ist nur eine Wickellage ausgeführt. Die Fortsetzung für die beispielsweise weiter innen liegenden Wickellagen ist durch spiralförmige, durch die Achsen der im Inneren des spiralförmigen Bündels angeordneten Hohlfasermembranen verlaufende, gestrichelte Linien repräsentiert. In dieser Figur sind ebenfalls die dem Betrachter zugewandten Enden der ersten Hohlfasermembranen offen und diejenigen der zweiten Hohlfasermembranen als mit einem Stopfen 21 geschlossen dargestellt.

In Figur 4 ist ein stapelförmiger Aufbau mit einer alternierenden Abfolge von aufeinanderliegenden ersten Schichten 18 und zweiten Schichten 19 dargestellt. Die Achsen der ersten und zweiten Hohlfasermembranen 1,2 erstrecken sich senkrecht zur Zeichenebene.

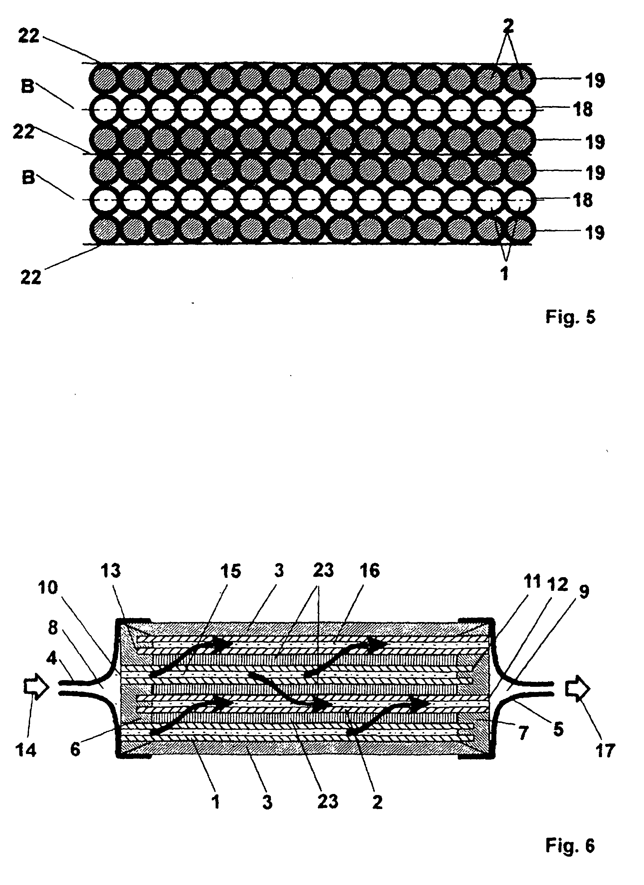

Figur 5 zeigt eine stapelförmige Anordnung aus ersten und zweiten Schichten 18,19, die aus einer Abfolge von Gruppierungen aufgebaut ist, die jeweils drei übereinanderliegende Schichten enthalten. Diese Gruppierungen, die in Figur 5 jeweils aus einer zweiten Schicht 19, einer darüberliegenden ersten Schicht 18 und wiederum einer zweiten Schicht 19 bestehen, sind symmetrisch jeweils in bezug auf eine Ebene B. Bei einer solchen Anordnung strömt das zu behandelnde Fluid in die Hohlfasermembranen der jeweils mittleren ersten Schicht 18 ein und strömt aus diesen symmetrisch in die darüberliegenden und die darunterliegenden Hohlfasermembranen der zweiten Schichten 19 ein. Bei gleicher Ausführung der einzelnen Gruppierungen tritt im Idealfall keine Fluidströmung zwischen den Gruppierungen auf. Es kann auch - wie in Figur 5 dargestellt - eine Folie 22 zwischen die Lagen benachbarter Gruppierungen eingelegt werden, wenn dies z.B. zur Kontrolle der Strömungen oder zur Vereinfachung der Fertigung zweckmäßig erscheint.

Figur 6 zeigt einen Längsschnitt durch eine erfindungsgemäße Vorrichtung, die im wesentlichen mit der in Figur 1 dargestellten übereinstimmt mit der Ausnahme, daß zwischen die Schichten der ersten Hohlfasermembranen 1 und zweiten Hohlfasermembranen 2 Trägermaterialien in Form von ein- oder mehrlagigen Flachmembranen 23 eingebracht sind. Hierbei können die Flachmembranen 23 allein oder die Flachmembranen 23 und sowohl die ersten als auch die zweiten Hohlfasermembranen 1,2 Matrix für die stoffspezifisch wirkenden Gruppen sein.

Im letzteren Fall strömt bei der Durchführung des erfindungsgemäßen Verfahrens das zu behandelnde Fluid, dargestellt wiederum durch den Pfeil 14, durch die Einlaßeinrichtung 4 der Vorrichtung gemäß Figur 6 in den Verteilerraum 8 und aus diesem in die Hohlräume 15 der ersten Hohlfasermembranen 1 ein, tritt in deren Wände ein und durchströmt diese. Hierbei wird das Fluid beispielsweise einer ersten stoffspezifischen Behandlung unterzogen. Danach verläßt das so behandelte Fluid die Wände der ersten Hohlfasermembranen 1 und strömt dann gleichmäßig durch die angrenzenden Flachmembranen 23 hindurch, wobei das Fluid einer weiteren stoffspezifischen Behandlung unterzogen wird. Anschließend tritt das Fluid über die Außenseite der Wände der angrenzenden zweiten Hohlfasermembranen 2 in deren Wände ein und durchströmt diese, wobei eine dritte stoffspezifische Behandlung in bezug auf im Fluid enthaltene Zielsubstanzen stattfindet. Nachfolgend tritt der nun dreifach stoffspezifisch behandelte Fluidstrom über die Innenseite der Wände der zweiten Hohlfasermembranen 2 in deren Hohlräume 16 ein, strömt aus diesen Hohlräumen 16 in den angrenzenden Sammelraum 9 und verläßt die Vorrichtung über die Auslaßeinrichtung 5 als behandeltes Fluid, dargestellt durch den Pfeil 17. Bei der dreifachen stoffspezifischen Behandlung kann es sich, wie bereits ausgeführt, um gleiche Behandlungen, jedoch auch um unterschiedliche, z.B. auf verschiedene Zielsubstanzen ausgerichtete Behandlungen handeln.

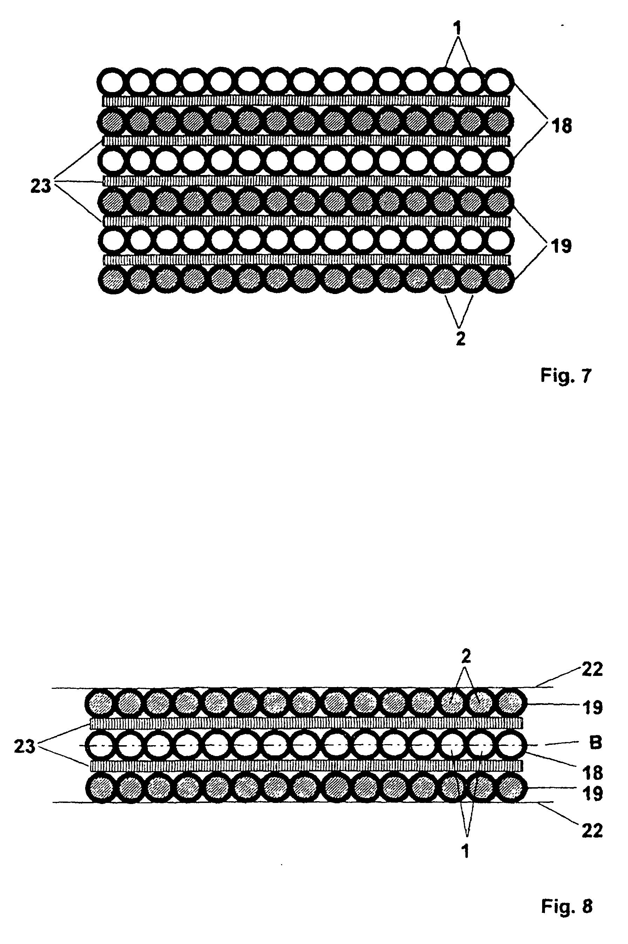

Figur 7 stellt einen stapelförmigen Aufbau von Hohlfasermembranen mit einer alternierenden Abfolge von ersten Schichten 18 und zweiten Schichten 19 dar, bei dem zwischen die ersten Schichten 18 und zweiten Schichten 19 jeweils Flachmembranen oder Flachmembranstapel 23 als Trägermaterial eingelegt sind.

Die Achsen der ersten und zweiten Hohlfasermembranen 1,2 erstrecken sich wiederum senkrecht zur Zeichenebene.

Figur 8 zeigt ein Segment einer stapelförmigen Anordnung aus ersten und zweiten Schichten 18,19 im Querschnitt, wobei die Anordnung ähnlich wie in Figur 5 aus einer Gruppierung von drei übereinanderliegenden Schichten aufgebaut ist. Diese Gruppierung aus einer zweiten Schicht 19, einer darüberliegenden ersten Schicht 18 und wiederum einer zweiten Schicht 19 ist symmetrisch in bezug auf eine Ebene B. Im Unterschied zu der in Figur 5 dargestellten Gruppierung ist gemäß Figur 8 zwischen die Schichten 18,19 aus ersten und zweiten Hohlfasermembranen 1,2 als Trägermaterial eine Flachmembran 23 eingelegt. Analog zur in Figur 5 gezeigten Anordnung strömt bei der Anordnung in Figur 8 das zu behandelnde Fluid in die ersten Hohlfasermembranen 1 der mittleren ersten Schicht 18 ein und strömt aus dieser symmetrisch in die darüberliegenden und die darunterliegenden zweiten Hohlfasermembranen 2 der zweiten Schichten 19 ein. Oberhalb und unterhalb der in Figur 8 gezeigten Gruppierung können sich weitere gleiche Gruppierungen anschließen, die - wenn gewünscht - durch eine Folie 22 voneinander getrennt sind.

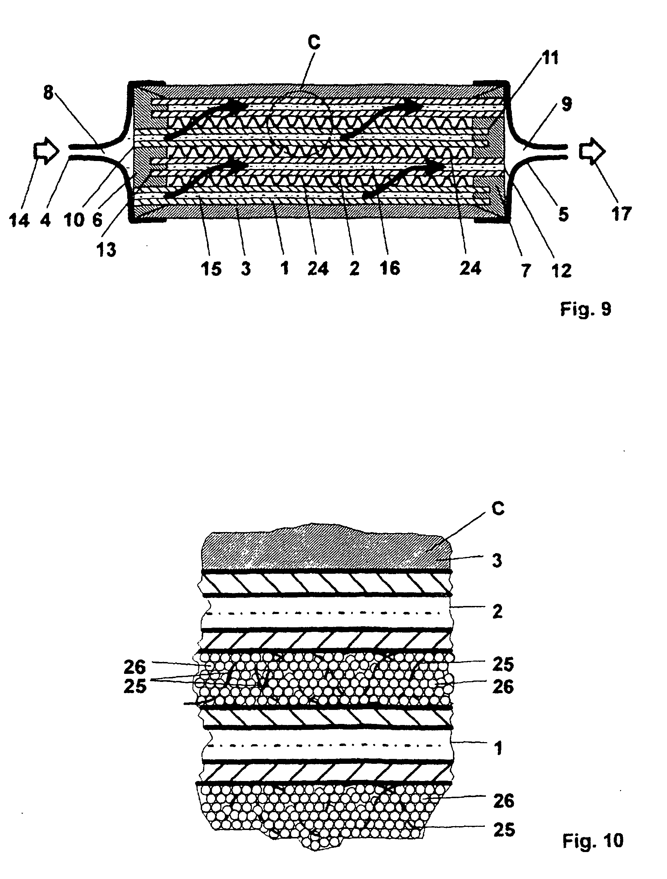

In Figur 9 ist eine weitere Ausführungsform einer erfindungsgemäßen Vorrichtung dargestellt, bei der zwischen die ersten und zweiten Hohlfasermembranen 1,2 als Trägermaterial Schichten von in fluiddurchlässige Vliese eingelagerten Partikeln 24 eingebracht sind. Im übrigen entspricht die in Figur 9 gezeigte Ausführung der erfindungsgemäßen Vorrichtung derjenigen in Figur 6, und auch das mittels der Vorrichtung durchführbare Verfahren zur stoffspezifischen Fluidbehandlung läuft entsprechend ab. Eine solche Vorrichtung kann auch mit dem Außenraum um die Hohlfasermembranen in Verbindung stehende Öffnungen aufweisen, die jedoch in dieser Figur nicht dargestellt sind. Diese können z.B. dann als Einfüllöffnungen dienen, wenn die Partikel nach Fertigstellung der Vorrichtung in die beispielsweise durch Vliese gebildeten Hohlräume zwischen den ersten und zweiten Schichten eingebracht werden, z.B. durch Einschwemmen. Auch Vorrichtungen, keine partikelförmigen Trägermaterialien beinhalten können derartige Öffnungen aufweisen, etwa zu Entlüftung des Außenraums um die Hohlfasermembranen.

Der in Figur 9 markierte Ausschnitt C ist vergrößert in Figur 10 wiedergegeben. Zwischen der im Ausschnitt C dargestellten Schicht der ersten Hohlfasermembranen 1 und der Schicht der zweiten Hohlfasermembranen 2 befindet sich ein Vlies 25, in das die Partikel 26 so eingelagert sind, daß eine gleichmäßige und stabile Verteilung der Partikel zwischen den ersten und zweiten Schichten erreicht wird.

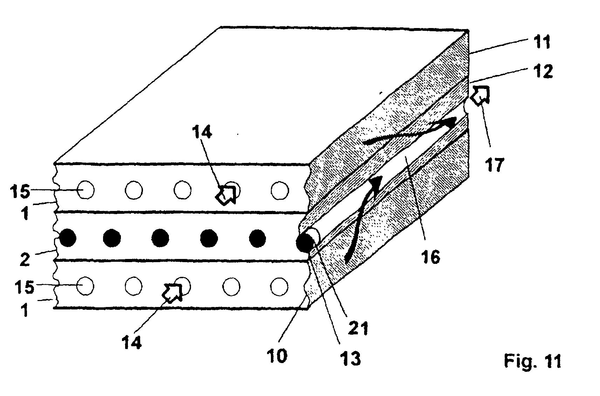

Figur 11 zeigt ein Segment einer stapelförmigen Anordnung von Membranhohlfaserketten mit jeweils einer Mehrzahl von zueinander parallelen Hohlräumen. Hierbei sind Ausschnitte aus zwei als erste Hohlfasermembranen fungierenden Membranhohlfaserketten 1 dargestellt, zwischen denen sich eine als zweite Hohlfasermembran fungierende Membranhohlfaserkette 2 befindet. Die Membranhohlfaserketten weisen einen rechteckigen Querschnitt auf, wodurch sich bei einem stapelförmigen Aufbau wie in der Figur 11 dargestellt, Füllgrade ε von annähernd 100% erzielen lassen. Das zu behandelnde Fluid 14 strömt bei dieser Ausführungsform aus einem - nicht dargestellten - Verteilerraum an den offenen Enden 10 in die zueinander parallelen Hohlräume 15 der ersten Membranhohlfaserketten 1 ein, durchströmt die Membranwände der ersten Membranhohlfaserketten 1 und anschließend der zweiten Membranhohlfaserkette 2 und tritt danach in die zueinander parallelen Hohlräume 16 der zweiten Membranhohlfaserkette 2 ein. Diese Hohlräume 16 sind an dem Ende 13 der zweiten Membranhohlfaserkette 2 mit Stopfen 21 verschlossen. Der behandelte Fluidstrom 17 verläßt die zweiten Membranhohlfaserkette 2 über deren geöffnetes Ende 12. In der Figur 4 können die Schichten 18 auch durch Membranhohlfaserketten 1 und die Schichten 19 auch durch Membranhohlfaserketten 2 gebildet sein. Analoges gilt auch bezüglich der Figuren 5, 7 und 8.

## Patentansprüche

1. Vorrichtung zur stoffspezifischen Behandlung eines Fluids, enthaltend
a) ein Gehäuse (3),
b) eine Einlaßeinrichtung (4) zum Einleiten des zu behandelnden Fluids in das Gehäuse (3), die mit einem Verteilerraum (8) in Verbindung steht,
c) eine Auslaßeinrichtung (5) zum Ableiten des behandelten Fluids aus dem Gehäuse (3), die mit einem Sammelraum (9) in Verbindung steht,
d) eine Anordnung aus ersten Hohlfasermembranen (1) und zweiten Hohlfasermembranen (2),
wobei die Hohlfasermembranen zueinander im wesentlichen parallel angeordnet sind und die Hohlfasermembranen ein dem Verteilerraum (8) zugewandtes Ende (10,13) und ein dem Sammelraum (9) zugewandtes Ende (11,12) aufweisen, wobei die ersten Hohlfasermembranen (1) durch ihre Wände gebildete, in Richtung des Verteilerraums (8) geöffnete und in Richtung des Sammelraums (9) geschlossene Hohlräume (15) aufweisen und an mindestens ihrem dem Verteilerraum (8) zugewandten Ende (10) in einer mit der Gehäusewand fluiddicht verbundenen Vergußmasse (6) eingebettet sind, wobei die zweiten Hohlfasermembranen (2) durch ihre Wände gebildete, in Richtung des Sammelraums (9) geöffnete und in Richtung
des Verteilerraums (8) geschlossene Hohlräume (16) aufweisen und an mindestens ihrem dem Sammelraum (9) zugewandten Ende (12) in einer mit der Gehäusewand fluiddicht verbundenen Vergußmasse (7) eingebettet sind und wobei im Gehäuse (3) eine Matrix enthalten ist, auf und/oder in der stoffspezifisch wirkende Gruppen immobilisiert sind, **dadurch gekennzeichnet, daß** die ersten Hohlfasermembranen (1) in mindestens einer flächigen ersten Schicht (18) von nebeneinanderliegenden ersten Hohlfasermembranen (1) und die zweiten Hohlfasermembranen (2) in mindestens einer flächigen zweiten Schicht (19) von nebeneinanderliegenden zweiten Hohlfasermembranen (2) angeordnet sind, daß jede erste Schicht (18) zumindest auf einer ihrer Seiten über im wesentlichen die gesamte Erstreckung ihrer Fläche zu einer zweiten Schicht (19) benachbart ist und jede zweite Schicht (19) zumindest auf einer ihrer Seiten über im wesentlichen die gesamte Erstreckung ihrer Fläche zu einer ersten Schicht (18) benachbart ist, daß die ersten und zweiten Schichten (18,19) im wesentlichen gleiche Dicke aufweisen, und daß der Füllgrad ε des Gehäuses (3) größer als 0,55 ist.

2. Vorrichtung nach Anspruch 1, **dadurch gekennzeichnet, daß** die Hohlfasermembranen (1,2) in den Schichten (18,19) flächig nebeneinander liegen.

3. Vorrichtung nach einem oder mehreren der Ansprüche 1 oder 2, **dadurch gekennzeichnet, daß** sie mindestens drei Schichten enthält.

4. Vorrichtung nach einem oder mehreren der Ansprüche 1 bis 3, **dadurch gekennzeichnet, daß** die ersten und die zweiten Hohlfasermembranen (18,19) in jeweils mindestens eine Hohlfasermatte eingebunden sind.

5. Vorrichtung nach Anspruch 4, **dadurch gekennzeichnet, daß** die Hohlfasermembranen mittels textiler Fäden (20) in die jeweilige Hohlfasermatte eingebunden sind.

6. Vorrichtung nach einem oder mehreren der Ansprüche 4 oder 5, **dadurch gekennzeichnet, daß** die mindestens eine Hohlfasermatte eine Webmatte ist.

7. Vorrichtung nach einem oder mehreren der Ansprüche 4 oder 5, **dadurch gekennzeichnet, daß** die mindestens eine Hohlfasermatte eine Wirkmatte ist.

8. Vorrichtung nach Anspruch 4, **dadurch gekennzeichnet, daß** die Hohlfasermembranen (1,2) mittels streifenförmiger Verbindungselemente in die jeweilige Hohlfasermatte eingebunden sind.

9. Vorrichtung nach einem oder mehreren der Ansprüche 4 bis 8, **dadurch gekennzeichnet, daß** die Hohlfasermatten eine geringe Querdehnung aufweisen.

10. Vorrichtung nach einem oder mehreren der Ansprüche 1 bis 9, **dadurch gekennzeichnet, daß** die Anordnung aus ebenen ersten Schichten (18) und ebenen zweiten Schichten (19) besteht, die zu einem Stapel aufeinandergelegt sind.

11. Vorrichtung nach einem oder mehreren der Ansprüche 1 bis 9, **dadurch gekennzeichnet, daß** die Anordnung aus übereinandergelegten Hohlfasermatten besteht, die jeweils erste oder zweite Hohlfasermembranen (1,2) enthalten, und die Hohlfasermatten miteinander zick-zack-förmig zu einem Stapel gefaltet sind.

12. Vorrichtung nach einem oder mehreren der Ansprüche 1 bis 9, **dadurch gekennzeichnet, daß** die Anordnung aus ersten und zweiten Schichten (18,19) besteht, die spiralförmig um eine zu den Hohlfasermembranen (1,2) im wesentlichen parallelen Wickelachse (A) gewickelt sind.

13. Vorrichtung nach einem oder mehreren der Ansprüche 1 bis 12, **dadurch gekennzeichnet, daß** die Anordnung eine alternierende Abfolge von ersten und zweiten Schichten (18,19) enthält.

14. Vorrichtung nach einem oder mehreren der Ansprüche 1 bis 12, **dadurch gekennzeichnet, daß** die Anordnung aus einer Abfolge von gleichen, jeweils drei übereinanderliegende Schichten enthaltenden Gruppierungen aufgebaut ist, wobei der Aufbau der Gruppierungen in bezug auf die ersten und zweiten Schichten (18, 19) symmetrisch ist.

15. Vorrichtung nach einem oder mehreren der Ansprüche 1 bis 14 **dadurch gekennzeichnet, daß** die ersten und/oder die zweiten Hohlfasermembranen Matrix für die stoffspezifisch wirkenden Gruppen sind.

16. Vorrichtung nach einem oder mehreren der Ansprüche 1 bis 14, **dadurch gekennzeichnet, daß** zwischen die ersten und zweiten Schichten (18,19) fluiddurchlässige Trägermaterialien (23,24) eingebracht sind, die Matrix für die stoffspezifisch wirkenden Gruppen sind.

17. Vorrichtung nach Anspruch 16, **dadurch gekennzeichnet, daß** die Trägermaterialien semipermeable poröse Flachmembranen (23) sind.

18. Vorrichtung nach Anspruch 16, **dadurch gekennzeichnet, daß** die Trägermaterialien Partikel (26) sind.

19. Vorrichtung nach einem oder mehreren der Ansprüche 1 bis 18, **dadurch gekennzeichnet, daß** die ersten und die zweiten Hohlfasermembranen (1,2) und die Trägermaterialien (23,24) Matrix für die stoffspezifisch wirkenden Gruppen sind.

20. Vorrichtung nach Anspruch 19, **dadurch gekennzeichnet, daß** die Matrix unterschiedliche stoffspezifisch wirkende Gruppen aufweist.

21. Vorrichtung nach einem oder mehreren der Ansprüche 1 bis 20, **dadurch gekennzeichnet, daß** die Hohlfasermembranen ein Verhältnis V_{w}/V_{b} des Volumens ihrer Wände V_{w} zu dem aus dem Volumen V_{w} ihrer Wände und dem Volumen Vₕ ihres Hohlraums zusammengesetzten Volumen V_{b} zwischen 0,4 und 0,9 aufweist, wobei sich die Größen V_{w}, Vₕ und V_{b} auf Wandvolumen, Hohlraumvolumen und Gesamtvolumen einer einzelnen Hohlfasermembran beziehen.

22. Vorrichtung nach einem oder mehreren der Ansprüche 1 bis 21, **dadurch gekennzeichnet, daß** der Füllgrad ε größer als 0,7 ist.

23. Vorrichtung nach einem oder mehreren der Ansprüche 1 bis 22, **dadurch gekennzeichnet, daß** die im Gehäuse (3) enthaltenen Membranen (1,2,23) einen mittleren Porendurchmesser zwischen 0,01 µm und 10 µm aufweisen.

24. Vorrichtung nach Anspruch 23, **dadurch gekennzeichnet, daß** die Membranen (1,2,23) einen mittleren Porendurchmesser zwischen 0,1 µm und 3 µm aufweisen.

25. Vorrichtung nach einem oder mehreren der Ansprüche 1 bis 24, **dadurch gekennzeichnet, daß** die im Gehäuse (3) enthaltenen Membranen (1,2,23) eine mittlere Porosität zwischen 50 Vol% und 90 Vol% aufweisen.

26. Vorrichtung nach einem oder mehreren der Ansprüche 1 bis 25, **dadurch gekennzeichnet, daß** die im Gehäuse enthaltenen Membranen (1,2,23) eine BET-Oberfläche zwischen 2 und 300 m² je cm³ Membranvolumen aufweisen.

27. Vorrichtung nach Anspruch 26, **dadurch gekennzeichnet, daß** die Membranen (1,2,23) eine BET-Oberfläche zwischen 4 und 30 m² je cm³ Membranvolumen aufweisen.

28. Vorrichtung nach einem oder mehreren der Ansprüche 1 bis 27, **dadurch gekennzeichnet, daß** die im Gehäuse enthaltenen Membranen (1,2,23) eine im wesentlichen isotrope Struktur aufweisen.

29. Vorrichtung nach einem oder mehreren der Ansprüche 1 bis 28, **dadurch gekennzeichnet, daß** die im Gehäuse enthaltenen ersten und zweiten Hohlfasermembranen (1,2) sowie das Trägermaterial (23,24) aus Cellulose, Polyamid, Polytetrafluorethylen oder Polyvinylidenfluorid oder daraus gewonnenen Modifikationen, Blends, Mischungen oder Copolymeren besteht.

30. Vorrichtung nach einem oder mehreren der Ansprüche 1 bis 29, **dadurch gekennzeichnet, daß** die stoffspezifisch wirkenden Gruppen Liganden zur affinen Trennung von Ligaten aus einer zu behandelnden Flüssigkeit sind.

31. Vorrichtung nach Anspruch 30, **dadurch gekennzeichnet, daß** die Liganden über Moleküle langkettiger Linearpolymerer an die Matrix gekoppelt sind, wobei die Moleküle der langkettigen Linearpolymeren eine Mehrzahl von Liganden tragen.

32. Vorrichtung nach einem oder mehreren der Ansprüche 1 bis 29, **dadurch gekennzeichnet, daß** die stoffspezifisch wirkenden Gruppen Katalysatoren sind.

33. Verfahren zur stoffspezifischen Behandlung eines Fluids, welches Verfahren mindestens folgende Schritte umfaßt:
a) Einleiten des zu behandelnden Fluids über eine Einlaßeinrichtung (4) in ein Gehäuses (3) in einen mit der Einlaßeinrichtung (4) in Verbindung stehenden Verteilerraum (8),
b) von dort Einströmen in die Hohlräume (15) von ersten Hohlfasermembranen (1) und Durchströmen der Wände der ersten Hohlfasermembranen (1),
c) Ausströmen des Fluids aus den Wänden der ersten Hohlfasermembranen (1),
d) Einströmen des Fluids in die Wände von zweiten Hohlfasermembranen (2) und Durchströmen der Wände,
e) Ausströmen aus den Wänden der zweiten Hohlfasermembranen (2) in deren Hohlräume (16),
f) Einströmen in einen Sammelraum (9) und
g) Ableiten des Fluids aus dem Gehäuse (3) über eine Auslaßeinrichtung (5),
wobei das Fluid auf dem Weg zwischen dem Verteilerraum (8) und dem Sammelraum (9) eine Matrix durchströmt, auf und/oder in der stoffspezifisch wirkende Gruppen immobilisiert sind, und wobei bei der Durchströmung der Matrix mindestens eine stoffspezfische Behandlung des Fluids erfolgt, **dadurch gekennzeichnet, daß** eine Vorrichtung nach Anspruch 1 verwendet wird.

34. Verfahren nach Anspruch 33, **dadurch gekennzeichnet, daß** das zu behandelnde Fluid bei der Durchströmung der Matrix nacheinander mindestens zwei verschiedenen stoffspezifischen Behandlungen unterworfen wird.

35. Verfahren nach einem oder mehreren der Ansprüche 33 oder 34, **dadurch gekennzeichnet, daß** das zu behandelnde Fluid rezirkuliert wird.

36. Verfahren zur Reinigung/Trennung von Ligaten aus einer ligathaltigen Flüssigkeit mittels Affinität, **dadurch gekennzeichnet, daß** eine Matrix eingesetzt wird, auf und/oder in der Liganden für besagte Ligaten immobilisiert sind, und das Verfahren gemäß einem oder mehreren der Ansprüche 35 bis 35 durchgeführt wird.

37. Verfahren zur katalytischen Behandlung von Fluiden, **dadurch gekennzeichnet, daß** eine Matrix eingesetzt wird, auf und/oder in der Katalysatoren immobilisiert sind, und das Verfahren gemäß einem oder mehreren der Ansprüche 33 bis 35 durchgeführt wird.

38. Verwendung der Vorrichtung nach einem oder mehreren der Ansprüche 1 bis 29 zur stoffspezifischen Behandlung von Fluiden.

39. Verwendung der Vorrichtung nach Anspruch 30 oder 31 zur Trennung/Reinigung von Ligaten aus einer diese Ligaten enthaltenden Flüssigkeit.

40. Verwendung der Vorrichtung nach Anspruch 32 zur Durchführung von katalytischen Reaktionen an in Fluiden enthaltenen Zielsubstanzen.

## Claims

1. Apparatus for substance-specific treatment of a fluid comprising
a) a housing (3),
b) an inlet arrangement (4), connected to a distribution space (8), for introducing the fluid to be treated into the housing (3),
c) an outlet arrangement (5), connected to a collection space (9), for removing the treated fluid from the housing (3),
d) an arrangement of first hollow-fiber membranes (1) and second hollow-fiber membranes (2),
whereby the hollow-fiber membranes are substantially parallel to each other and the hollow-fiber membranes have an end (10,13) facing the distribution space (8) and an end (11,12) facing the collection space (9), whereby the first hollow-fiber membranes (1) have cavities (15) formed by their walls, open in the direction of the distribution space (8) and closed in the direction of the collection space (9), and at least at the end (10) facing the distribution space (8) are embedded in a sealing compound (6) that is joined in a fluid-tight manner with the wall of the housing, and whereby the second hollow-fiber membranes (2) have cavities (16) formed by their walls, open in the direction of the collection space (9) and closed in the direction of the distribution space (8), and at least at the end (12) facing the collection space (9) are embedded in a sealing compound (7) that is joined in a fluid-tight manner to the wall of the housing,
**characterized in that** the first hollow-fiber membranes (1) are arranged in at least one flat first layer (18) of adjacent first hollow-fiber membranes (1) and the second hollow-fiber membranes (2) are arranged in at least one flat second layer (19) of adjacent second hollow-fiber membranes (2), that each first layer (18) is adjacent on at least one of its sides, over substantially the entire extent of its surface, to a second layer (19), and each second layer (19) is adjacent on at least one of its sides, over substantially the entire extent of its surface, to a first layer (18), that the first and second layers (18,19) have substantially the same thickness, that the housing (3) contains a matrix on and/or in which groups acting in a substance-specific manner are immobilized, and that the filling ratio ε of the housing (3) is greater than 0.55.

2. Apparatus according to Claim 1, **characterized in that** the hollow-fiber membranes (1,2) in the layers (18, 19) lie next to each other in a plane.

3. Apparatus according to one or more of Claims 1 or 2, **characterized in that** it contains at least three layers.

4. Apparatus according to one or more of Claims 1 to 3, **characterized in that** the first and second hollow-fiber membranes (18,19) are incorporated into at least one hollow-fiber mat respectively.

5. Apparatus according to Claim 4, **characterized in that** the hollow-fiber membranes are incorporated into the respective hollow-fiber mat using textile threads (20).

6. Apparatus according to one or more of Claims 4 or 5, **characterized in that** the at least one hollow-fiber mat is a woven mat.

7. Apparatus according to one or more of Claims 4 or 5, **characterized in that** the at least one hollow-fiber mat is a knitted mat.

8. Apparatus according to Claim 4, **characterized in that** the hollow-fiber membranes (1,2) are incorporated into the respective hollow-fiber mat using strip-form connecting elements.

9. Apparatus according to one or more of Claims 4 to 8, **characterized in that** the hollow-fiber mats have a low transverse elongation.

10. Apparatus according to one or more of Claims 1 to 9, **characterized in that** the arrangement consists of flat first layers (18) and flat second layers (19) that are superimposed to form a stack.

11. Apparatus according to one or more of Claims 1 to 9, **characterized in that** the arrangement consists of superimposed hollow-fiber mats that each contain first or second hollow-fiber membranes (1,2), and the hollow-fiber mats are folded jointly in a zigzag manner to form a stack.

12. Apparatus according to one or more of Claims 1 to 9, **characterized in that** the arrangement consists of first and second layers (18,19) that are wound spirally around a winding axis (A) substantially parallel to the hollow-fiber membranes (1,2).

13. Apparatus according to one or more of Claims 1 to 12, **characterized in that** the arrangement has an alternating sequence of first and second layers (18,19).

14. Apparatus according to one or more of Claims 1 to 12, **characterized in that** the arrangement is made from a sequence of equal groups, each containing three superimposed layers, whereby the structure of the groups is symmetrical with respect to the first and second layers (18, 19).

15. Apparatus according to one or more of Claims 1 to 14, **characterized in that** the first and/or second hollow-fiber membranes serve as a matrix for the groups acting in a substance-specific manner.

16. Apparatus according to one or more of Claims 1 to 14, **characterized in that** fluid-permeable carrier materials (23,24) are inserted between the first and second layers (18,19) and serve as a matrix for the groups acting in a substance-specific manner.

17. Apparatus according to Claim 16, **characterized in that** the carrier materials are semi-permeable porous flat membranes (23).

18. Apparatus according to Claim 16, **characterized in that** the carrier materials are particles (26).

19. Apparatus according to one or more of Claims 1 to 18, **characterized in that** the first and second hollow-fiber membranes (1,2) and the carrier materials (23,24) serve as a matrix for the groups acting in a substance-specific manner.

20. Apparatus according to Claim 19, **characterized in that** the matrix has different groups acting in a substance-specific manner.

21. Apparatus according to one or more of Claims 1 to 20, **characterized in that** the hollow-fiber membranes have a ratio V_{w}/Vₘ of the volume of their walls V_{w} to the volume Vₘ comprising the volume of their walls V_{w} and the volume V_{c} of their cavity between 0.4 and 0.9, where V_{w}, V_{c}, and Vₘ refer to the wall, cavity and total volumes, respectively, of an individual hollow-fiber membrane.

22. Apparatus according to one or more of Claims 1 to 21, **characterized in that** the filling ratio ε is greater than 0.7.

23. Apparatus according to one or more of Claims 1 to 22, **characterized in that** the membranes (1,2,23) contained in the housing (3) have a mean pore diameter between 0.01 µm and 10 µm.

24. Apparatus according to Claim 23, **characterized in that** the membranes (1,2,23) have a mean pore diameter between 0.1 µm and 3 µm.

25. Apparatus according to one or more of Claims 1 to 24, **characterized in that** the membranes (1,2,23) contained in the housing (3) have a mean porosity between 50% and 90% by volume.

26. Apparatus according to one or more of Claims 1 to 25, **characterized in that** the membranes (1,2,23) contained in the housing have a BET surface area between 2 and 300 m² per cm³ of membrane volume.

27. Apparatus according to Claim 26, **characterized in that** the membranes (1,2,23) have a BET surface area between 4 and 30 m² per cm³ of membrane volume.

28. Apparatus according to one or more of Claims 1 to 27, **characterized in that** the membranes (1,2,23) contained in the housing have a substantially isotropic structure.

29. Apparatus according to one or more of Claims 1 to 28, **characterized in that** the first and second membranes (1,2) and the carrier material (23,24) contained in the housing are made from cellulose, polyamide, polytetrafluoroethylene, or polyvinylidene fluoride, or modifications, blends, mixtures, or copolymers thereof.

30. Apparatus according to one or more of Claims 1 to 29, **characterized in that** the groups acting in a substance-specific manner are ligands for affinity separation of ligates from a liquid to be treated.

31. Apparatus according to Claim 30, **characterized in that** the ligands are coupled to the matrix via molecules of long-chain linear polymers, whereby the molecules of the long-chain linear polymers carry a plurality of ligands.

32. Apparatus according to one or more of Claims 1 to 29, **characterized in that** the groups acting in a substance-specific manner are catalysts.

33. Process for substance-specific treatment of a fluid, the process comprising at least the following steps:
a) Introduction of the fluid to be treated via an inlet arrangement (4) into a distribution space (8) in a housing (3), the distribution space (8) connected to the inlet arrangement (4),
b) Passing of the fluid from there into the cavities (15) of first hollow-fiber membranes (1) and through the walls of the first hollow-fiber membranes (1),
c) Passing of the fluid out of the walls of the first hollow-fiber membranes (1),
d) Passing of the fluid into and through the walls of second hollow-fiber membranes (2),
e) Passing of the fluid out of the walls of the second hollow-fiber membranes (2) into their cavities (16),
f) Passing of the fluid into a collection space (9), and,
g) Removal of the fluid from the housing (3) via an outlet arrangement (5),
whereby the fluid on the way from the distribution space (8) to the collection space (9) flows through a matrix on and/or in which groups acting in a substance-specific manner are immobilized, and whereby at least one substance-specific treatment of the fluid takes place as it passes through the matrix,
**characterized in that** an apparatus according to Claim 1 is used.

34. Process according to Claim 33, **characterized in that** the fluid to be treated in flowing through the matrix is successively subjected to at least two different substance-specific treatments.

35. Process according to one or more of Claims 33 or 34, **characterized in that** the fluid to be treated is recirculated.

36. Process for cleaning/separation of ligates from a ligate-containing liquid by affinity, **characterized in that** a matrix is used on and/or in which ligands for said ligates are immobilized, and the process is conducted according to one or more of Claims 35 to 35.

37. Process for catalytic treatment of fluids, **characterized in that** a matrix is used on and/or in which catalysts are immobilized and the process is conducted according to one or more of Claims 33 to 35.

38. Use of the apparatus according to one or more of Claims 1 to 29 for substance-specific treatment of fluids.

39. Use of the apparatus according to Claim 30 or 31 for separation/cleaning of ligates from a liquid containing these ligates.

40. Use of the apparatus according to Claim 32 for conducting catalytic reactions on target substances contained in fluids.

## Revendications

1. Dispositif pour le traitement sélectif d'un fluide, comprenant
a) une enveloppe (3)
b) un dispositif d'entrée (4) pour l'introduction du fluide à traiter dans l'enveloppe (3), qui communique avec une chambre de répartition (8),
c) un dispositif de sortie (5) pour l'évacuation du fluide traité hors de l'enveloppe (3), qui communique avec une chambre collectrice (9),
d) un agencement de premières membranes à fibres creuses (1) et de secondes membranes à fibres creuses (2),
dans lequel les membranes à fibres creuses sont disposées essentiellement parallèlement les unes aux autres et comportent une extrémité (10, 13) tournée vers la chambre de répartition (8) et une extrémité (11, 12) tournée vers la chambre collectrice (9), dans lequel les premières membranes à fibres creuses (1) présentent des cavités (15) définies par leurs parois, qui sont ouvertes en direction de la chambre de répartition (8) et sont fermées en direction de la chambre collectrice (9), et, au moins à leur extrémité (10) tournée vers la chambre de répartition (8), sont noyées dans une masse de scellage (6), qui est liée de manière étanche au fluide à la paroi de l'enveloppe, dans lequel les deuxièmes membranes à fibres creuses (2) présentent des cavités (16) définies par leurs parois, qui sont ouvertes dans la direction de la chambre collectrice (9) et sont fermées dans la direction de la chambre de répartition (8) et, au moins à leur extrémité (12) tournée vers la chambre collectrice (9), sont noyées dans une masse de scellage (7), qui est liée de manière étanche au fluide à la paroi de l'enveloppe, dans lequel l'enveloppe (3) contient une matrice sur et/ou dans laquelle sont fixés des groupes à action sélective,
**caractérisé en ce que** les premières membranes à fibres creuses (1) sont disposées en au moins une première couche (18) plane de premières membranes à fibres creuses (1), rangées les unes à côté des autres, et les deuxièmes membranes à fibres creuses (2) sont disposées en au moins une deuxième couche (19) plane de deuxièmes membranes à fibres creuses (2) rangées les unes à côté des autres, **en ce que** chaque première couche (18), au moins sur l'une de ses faces, essentiellement sur toute l'étendue de sa surface, est contiguë avec une deuxième couche (19) et chaque deuxième couche (19), au moins sur l'une de ses faces, essentiellement sur toute l'étendue de sa surface, est contiguë avec une première couche (18), **en ce que** les premières et deuxièmes couches (18, 19) ont essentiellement la même épaisseur et **en ce que** le coefficient de remplissage ε de l'enveloppe (3) est supérieur à 0,55.

2. Dispositif selon la revendication 1, **caractérisé en ce que** les membranes à fibres creuses (1, 2), dans les couches (18, 19) sont disposées à plat les unes à côté des autres.

3. Dispositif selon une ou plusieurs des revendications 1 ou 2, **caractérisé en ce qu'**il comporte au moins trois couches (18, 19).

4. Dispositif selon une ou plusieurs des revendications 1 à 3, **caractérisé en ce que** les premières et les deuxièmes membranes à fibres creuses (18, 19) sont liées chacune à au moins une nappe de fibres creuses.

5. Dispositif selon la revendication 4, **caractérisé en ce que** les membranes à fibres creuses (1) sont liées à la nappe de fibres creuses concernée par des fils textiles (20).

6. Dispositif selon une ou plusieurs des revendications 4 ou 5, **caractérisé en ce que** la nappe de fibres creuses, au nombre d'au moins une, est une nappe tissée.

7. Dispositif selon une ou plusieurs des revendications 4 ou 5, **caractérisé en ce que** la nappe de fibres creuses, au nombre d'au moins une, est une nappe tricotée.

8. Dispositif selon la revendication 4, **caractérisé en ce que** les membranes à fibres creuses (1, 2) sont liées à la nappe de fibres creuses concernée par des éléments de liaison en forme de bandes.

9. Dispositif selon une ou plusieurs des revendications 4 à 8, **caractérisé en ce que** les nappes de fibres creuses présentent un faible allongement transversal.

10. Dispositif selon une ou plusieurs des revendications 1 à 9, **caractérisé en ce que** l'agencement est formé de premières couches (18) planes et de deuxièmes couches (19) planes qui sont disposées les unes au-dessus des autres en une pile.

11. Dispositif selon une ou plusieurs des revendications 1 à 9, **caractérisé en ce que** l'agencement est formé de nappes de fibres creuses empilées, qui contiennent chacune des premières ou des deuxièmes membranes à fibres creuses (1, 2) et **en ce que** les nappes de fibres creuses sont pliées les unes avec les autres en accordéon pour former une pile.

12. Dispositif selon une ou plusieurs des revendications 1 à 9, **caractérisé en ce que** l'agencement est formé de premières couches et de deuxièmes couches (18, 19), qui sont enroulées en spirale autour d'un axe d'enroulement (A) essentiellement parallèle aux membranes à fibres creuses (1, 2).

13. Dispositif selon une ou plusieurs des revendications 1 à 12, **caractérisé en ce que** l'agencement contient une suite en alternance de premières couches et de deuxièmes couches (18, 19).

14. Dispositif selon une ou plusieurs des revendications 1 à 12, **caractérisé en ce que** l'agencement est formé d'une suite de groupes identiques avec chaque fois trois couches superposées, la structure des groupes en ce qui concerne les premières et deuxièmes couches (18, 19) étant symétrique.

15. Dispositif selon une ou plusieurs des revendications 1 à 14, **caractérisé en ce que** les premières et/ou deuxièmes membranes à fibres creuses sont des matrices pour les groupes à action sélective.

16. Dispositif selon une ou plusieurs des revendications 1 à 14, **caractérisé en ce que** des matériaux supports (23, 24) perméables aux fluides qui forment la matrice pour les groupes à action sélective sont disposés entre les premières et les deuxièmes couches (18, 19).

17. Dispositif selon la revendication 16, **caractérisé en ce que** les matériaux supports sont des membranes planes (23) poreuses, semi-perméables.

18. Dispositif selon la revendication 16, **caractérisé en ce que** les matériaux supports sont des particules (26).

19. Dispositif selon une ou plusieurs des revendications 1 à 18, **caractérisé en ce que** les premières et les deuxièmes membranes à fibres creuses (1, 2) et les matériaux supports (23, 24) sont des matrices pour les groupes à action sélective.

20. Dispositif selon la revendication 19, **caractérisé en ce que** la matrice présente des groupes à action sélective différents.

21. Dispositif selon une ou plusieurs des revendications 1 à 20, **caractérisé en ce que** les membranes à fibres creuses présentent un rapport V_{w}/V_{b} du volume de leurs parois V_{w} au volume V_{b}, composé du volume V_{w} de leurs parois et du volume Vₕ de leur cavité, qui est compris entre 0,4 et 0,9, les grandeurs V_{w}, Vₕ et V_{b} se rapportant aux volume de paroi, volume de cavité et volume total d'une seule membrane à fibres creuses.

22. Dispositif selon une ou plusieurs des revendications 1 à 21, **caractérisé en ce que** le coefficient de remplissage ε est supérieur à 0,7.

23. Dispositif selon une ou plusieurs des revendications 1 à 22, **caractérisé en ce que** les membranes (1, 2, 23) contenues dans l'enveloppe (3) présentent un diamètre moyen de pores compris entre 0,01 µm et 10 µm.

24. Dispositif selon la revendication 23, **caractérisé en ce que** les membranes (1, 2, 23) présentent un diamètre moyen de pores compris entre 0,1 µm et 3 µm.

25. Dispositif selon une ou plusieurs des revendications 1 à 24, **caractérisé en ce que** les membranes (1, 2, 23) contenues dans l'enveloppe (3) présentent une porosité moyenne comprise entre 50 % du volume et 90 % du volume.

26. Dispositif selon une ou plusieurs des revendications 1 à 25, **caractérisé en ce que** les membranes (1, 2, 23) contenues dans l'enveloppe (3) présentent une surface BET comprise entre 2 et 300 m² par cm³ de volume de membrane.

27. Dispositif selon la revendication 26, **caractérisé en ce que** les membranes (1, 2, 23) présentent une surface BET comprise entre 4 et 30 m² par cm³ de volume de membrane.

28. Dispositif selon une ou plusieurs des revendications 1 à 27, **caractérisé en ce que** les membranes (1, 2, 23) contenues dans l'enveloppe (3) présentent une structure essentiellement isotrope.

29. Dispositif selon une ou plusieurs des revendications 1 à 28, **caractérisé en ce que** les premières et deuxièmes membranes à fibres creuses (1, 2) contenues dans l'enveloppe et le matériau support sont en cellulose, polyamide, poly-tetrafluoroéthylène ou en fluorure de polyvinylidène ou en des dérivés, des compositions, des mélanges ou des copolymères obtenus à partir de ceux-ci.

30. Dispositif selon une ou plusieurs des revendications 1 à 29, **caractérisé en ce que** les groupes à action sélective sont des ligands pour la séparation affine de substances dans un liquide à traiter.

31. Dispositif selon la revendication 30, **caractérisé en ce que** les ligands sont couplés à la matrice par des molécules de polymères linéaires à longue chaîne, les molécules des polymères linéaires à longue chaîne portant une pluralité de ligands.

32. Dispositif selon une des revendications 1 à 29, **caractérisé en ce que** les groupes à action sélective sont des catalyseurs.

33. Procédé pour le traitement sélectif d'un fluide, ledit procédé comportant au moins les étapes suivantes :
a) introduction du fluide à traiter via un dispositif d'entrée (4) dans une enveloppe (3), dans une chambre de répartition (8) qui communique avec le dispositif d'entrée (4),
b) de là écoulement dans les cavités (15) de premières membranes à fibres creuses (1) et passage au travers des parois desdites premières membranes à fibres creuses (1),
c) sortie du fluide des parois des premières membranes à fibres creuses (1),
d) entrée du fluide dans les parois de deuxièmes membranes à fibres creuses (2) et passage à travers les parois,
e) sortie du fluide des parois des deuxièmes membranes à fibres creuses (1), dans les cavités (16) desdites membranes,
f) entrée dans une chambre collectrice (9) et
g) évacuation du fluide hors de l'enveloppe (3) par l'intermédiaire d'un dispositif de sortie (5)
le fluide, sur son trajet entre la chambre de répartition (8) et la chambre collectrice (9), traversant une matrice sur et/ou dans laquelle sont fixés des groupe à action sélective, au moins un traitement sélectif du fluide ayant lieu lors du passage à travers la matrice, **caractérisé en ce qu'**on utilise un dispositif selon la revendication 1.

34. Procédé selon la revendication 33, **caractérisé en ce que** le fluide à traiter, lors de son passage à travers la matrice, est soumis à au moins deux traitements sélectifs différents.

35. Procédé selon une ou plusieurs des revendications 33 ou 34, **caractérisé en ce qu'**on effectue une recirculation du fluide à traiter.

36. Procédé pour épurer/séparer par affinité des partenaires de liaison contenus dans un liquide, **caractérisé en ce qu'**on utilise une matrice sur et/ou dans laquelle sont fixés des ligands pour lesdits partenaires de liaison et on met en oeuvre le procédé selon une ou plusieurs des revendications 33 à 35.

37. Procédé pour le traitement catalytique de fluides, **caractérisé en ce qu'**on utilise une matrice sur et/ou dans laquelle sont fixés des catalyseurs pour lesdits partenaires de liaison et on met en oeuvre le procédé selon une ou plusieurs des revendications 33 à 35.

38. Utilisation du dispositif selon une ou plusieurs des revendications 1 à 29 pour le traitement sélectif de fluides.

39. Utilisation du dispositif selon la revendication 30 ou 31 pour l'épuration/séparation de partenaires de liaison dans un liquide contenant lesdits partenaires de liaison.

40. Utilisation du dispositif selon la revendication 32 pour la mise en oeuvre de réactions catalytiques sur des substances cibles contenues dans des fluides.
